(19) Europäisches Patentamt / European Patent Office / Office européen des brevets

(11) **EP 2 547 034 B1**

(12) # EUROPÄISCHE PATENTSCHRIFT

(45) Veröffentlichungstag und Bekanntmachung des Hinweises auf die Patenterteilung:
**29.04.2015 Patentblatt 2015/18**

(51) Int Cl.:
***H04L 9/08*** *(2006.01)* ***H04L 9/32*** *(2006.01)*
***H04L 9/06*** *(2006.01)*

(21) Anmeldenummer: **12174787.7**

(22) Anmeldetag: **03.07.2012**

(54) **Verfahren und Vorrichtung zur sicheren Datenübertragung**

Method and device for secure data transfer

Procédé et dispositif de transmission de données sécurisée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2011 DE 102011079109**

(43) Veröffentlichungstag der Anmeldung:
**16.01.2013 Patentblatt 2013/03**

(73) Patentinhaber: **Fraunhofer-Gesellschaft zur Förderung der angewandten Forschung e.V.**
**80686 München (DE)**

(72) Erfinder: **Viehmann, Johannes**
**10589 Berlin (DE)**

(74) Vertreter: **Gross, Felix et al**
**Patentanwälte Maikowski & Ninnemann**
**Postfach 15 09 20**
**10671 Berlin (DE)**

(56) Entgegenhaltungen:
**DE-C2- 19 740 333**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

## 1 Grundlegende Notationen, Begriffe und Verfahren

In diesem Abschnitt werden zunächst, die Grundlagen beschrieben, die für die Beschreibung der Erfindung (siehe Abschnitt 4), ein Verfahren zur sicheren Datenübertragung mit den Merkmalen des Anspruchs 1 und ein Datenübertragungssystem zur sicheren Datenübertragung mit den Merkmalen des Anspruchs 13, sinnvoll sind.
Die Konkatenation von zwei Bitfolgen x und y mit ihren Längen und Benennungen als Präfix wird im Folgenden mit dem Operatorsymbol $\circ$ als $x \circ y$ notiert.
Die symmetrische Verschlüsselung einer Bitfolge x mit einem Schlüssel K wird als $E_K(x)$ notiert.
Die Entschlüsselung wird als $D_K(y)$ notiert. Dabei gilt: $D_K(E_K(x))=x$
K, $E_K(x)$, $D_K(E_K(x))$ sowie $x \circ y$ sind jeweils für sich wiederum Bitfolgen. Nachrichten sind ebenfalls Bitfolgen.

### Sicherer Kanal, Prüfdaten (MAC), One-Time-Pad Plus (OTPP)

Ein grundlegendes kryptografisches Problem ist die Errichtung eines sicheren Kanals. **"Sicherer Kanal"** bedeutet, dass beim Austausch von Nachrichten deren Geheimhaltung, Integrität und Authentizität sowie deren zeitlich korrekte Einordnung gewährleistet werden können. Wenn der Datenaustausch abgehört werden könnte oder wenn versucht werden könnte, Manipulationen vorzunehmen, müssen zur Erzeugung eines sicheren Kanals kryptografische Verfahren eingesetzt werden. Bei der vorliegenden Erfindung müssen alle direkten Verbindungen über mit kryptografischen Verfahren zu erschaffende sichere Kanäle laufen.
Mit dem Verschlüsselungsverfahren "One-Time-Pad" lässt sich bei korrekter Anwendung eine beweisbar perfekt sichere Geheimhaltung erzielen [23]. Zu beachten ist dabei:

> Zur Verhinderung von simplen Known-/Chosen-Plaintext-Attacken muss zweifach verschlüsselt werden. Soll auch eine Analyse des verschlüsselten Datenverkehrs ausgeschlossen werden, muss die Größe von relevanten Daten durch ein zufälliges Padding und Splitting verschleiert werden. Um zu verbergen, ob überhaupt relevante Daten ausgetauscht werden, sind auch zufällige Scheinnachrichten auszutauschen.

Beim korrekten Einsatz des One-Time-Pads werden die vorab sicher auszutauschenden geheimen symmetrischen Schlüssel aufgebraucht. Mit auf der Quantentheorie basierenden Verfahren kann eventuell eine physikalisch sichere Vergrößerung von One-Time-Pad-Schlüsseln erreicht werden [3] - die diesbezügliche Gültigkeit der Quantentheorie vorausgesetzt.
In den hier beschriebenen Ausführungsformen wird beispielhaft das One-Time-Pad eingesetzt, um die dauerhafte Verfügbarkeit von Verfahren zur Errichtung eines sicheren Kanals unabhängig von der technischen Entwicklung zu belegen.
Solange die Sicherheit von Verschlüsselungsverfahren mit wieder verwendbaren Schlüsseln wie AES [9] oder Twofish [21] als hinreichend angesehen wird, können diese statt des One-Time-Pads zur Verschlüsselung und zur effizienten Absicherung der sicheren Kanäle in der im Folgenden gezeigten Erfindung genutzt werden.
Die Integrität einer Nachricht m kann durch die geeignete Hinzufügung von Prüfdaten (Message Authentication Code, MAC) sichergestellt werden. Da die Prüfdaten auch erraten werden können, ist die Sicherheit der Integritätsprüfung mit MAC allerdings prinzipiell nicht perfekt. Es lassen sich immerhin Verfahren entwickeln, bei denen Angreifer, selbst wenn ihnen unbegrenzte Rechenleistung zur Verfügung stünde, tatsächlich nur raten können. Die Wahrscheinlichkeit, dass ein MAC für eine bestimmte Nachricht m zufällig korrekt erraten wird, lässt sich beliebig verringern - wenn auch auf Kosten einer wachsenden zu übertragenden Datenmenge.
Es sei P(x) das Ergebnis einer Funktion, die aus einer beliebigen Bitfolge x Prüfdaten erzeugt, welche geeignet sind, um etwaige Manipulationen an x aufdecken zu können (das kann etwa das Ergebnis einer Hash-Funktion, z. B. SHA [11], oder auch eine anhand eines zufälligen Schlüssels $K_P$ erzeugte Permutation/Verschlüsselung von m zusammen mit dem Schlüssel $K_P$ sein).
Es seien $K_I$ und $K_O$ zwei geheime Schlüssel, die nur Alice und Bob bekannt sind und die nur einmal als One-Time-Pad verwendet werden.
Wird nun eine Nachricht m in der Form $E_{K_O}(E_{K_I}(m) \circ P(E_{K_I}(m)))$ übermittelt, so können $E_{K_I}(m)$ und $P(E_{K_I}(m))$ von einem Angreifer nur erraten werden: Selbst wenn der Angreifer m kennt oder wenn er m sogar frei wählen darf, ist für ihn trotzdem jede beliebige Bitfolge als $E_{K_I}(m)$ gleich wahrscheinlich, da die perfekte Geheimhaltung von $E_{K_I}(m)$ und $P(E_{K_I}(m))$ durch die nochmalige Verschlüsselung mit $K_O$ gegeben ist.
Wird eine Bitfolge erraten, die zufällig eine gültige Form $E_{K_O}(E_{K_I}(m) \circ P(E_{K_I}(m)))$ hat, so wird die Integritätsprüfung ausgehebelt. $P(E_{K_I}(m))$ und mithin die Länge der zu erratenden Bitfolge können aber beliebig umfangreich gewählt werden, so dass die Wahrscheinlichkeit, dass dies je passiert, beliebig klein gehalten werden kann. Insbesondere kann

$P(E_{K_I}(m))$ so umfangreich gewählt werden, dass keine Kollisionen auftreten können, weil zu jedem $P(E_{K_I}(m))$ höchstens ein passendes $E_{K_I}(m)$ existiert.

Werden beim Schlüsselaustausch auch die Identitäten der Kommunikationspartner überprüft, so lässt sich die Authentizität aus der Integrität schließen.

Die Schlüssel $K_I$ und $K_O$ müssen vertraulich zwischen Alice und Bob ausgetauscht werden, sie müssen geheim bleiben und dürfen nur einmal verwendet werden. $K_I$ muss die Länge von m haben, $K_O$ die Länge von $E_{K_I}(m)\circ P(E_{K_I}(m))$. Es bietet sich an, einmalig eine lange Bitfolge G auszutauschen und dann für jede Nachricht zwei unbenutzte disjunkte Teilstücke passender Länge aus G als neue Schlüssel auszuwählen.

Die Schlüsselpositionen und Längen in der Bitfolge G müssen dann ebenfalls kommuniziert werden. Es seien $g_K$ und $g_{K_O}$ diese Positions- und Längenangaben. Die zu übermittelnde Nachricht hat dann die Form $E_{K_O}(E_{K_I}(m)\circ P(E_{K_I}(m)))\circ g_{K_O}\circ g_{K_I}$

Mit $g_{KI}$ und $g_{KO}$ wird auch eine Nummerierung der übermittelten Nachrichten erreicht, sodass Änderungen in deren Reihenfolge erkannt werden können.

Solange jedes Bit von G tatsächlich bestimmungsgemäß nur einmal verwendet wird und solange G geheim gehalten wird, handelt es sich bei dem gezeigten Verfahren um eine beliebig sichere Kommunikation, die auch mit unbegrenzt leistungsfähigen Computern nicht gebrochen werden könnte.

Dieses Verfahren, bestehend aus One-Time-Pad plus Prüfdaten und Positionsangaben, wird im Folgenden beispielhaft für einzelne Kommunikationsschritte zur Erzeugung beliebig sicherer Kanäle verwendet und als OTPP bezeichnet.

**Secret-Sharing, sichere $k_n$-fache Zerlegung $Z_{k_n}$**

Mit "Secret-Sharing" wird ein Verfahren zum Zerlegen von geheimen Daten x in k Stücke bezeichnet, so dass eine bestimmte Anzahl n von den k Stücken dieser Aufteilung erforderlich ist, um daraus x rekonstruieren zu können. Aus weniger als n Stücken der Aufteilung lassen sich keine Informationen über x gewinnen.

Ist n gleich k, liefert folgendes einfaches und effizientes Verfahren perfekte Sicherheit: Auf eine sicher zu zerlegende Bitfolge x werden mehrere verschiedene zufällige Einmal-Schlüssel mit der Länge von x zur Verschlüsselung per XOR angewendet. Die Teile der Zerlegung sind dann die mehrfach verschlüsselten Daten und die jeweils als One-Time-Pad genutzten Schlüssel.

Ein Beispiel für ein Verfahren, das mit perfekter Sicherheit ein n kleiner gleich k erlaubt, findet sich in [22].

Bei den im Folgenden beschriebenen Ausführungsformen kann jedes perfekt sichere Secret-Sharing-Verfahren eingesetzt werden.

Die Menge der k Teilstücke einer entsprechenden Aufteilung wird im Folgenden als sichere $k_n$-fache Zerlegung bezeichnet und als $Z_{k_n}(x)$ notiert. Die Teilstücke werden als $T_{k_n p}(x)$ notiert. $Z_{k_n}(x)= \{T_{k_n 0}(x), \ldots , T_{k_n k-1}(x)\}$

Es sei M eine Teilmenge der sicheren Zerlegung $Z_{k_n}(x)$. Die Umkehrfunktion zum Zusammenführen von Teilstücken einer sicheren Zerlegung wird fortan als $Z_{k_n}^{-1}(M)$ notiert. Enthält M mindestens n verschieden Teilstücke von $Z_{k_n}(x)$, so rekonstruiert $Z_{k_n}^{-1}(M)$ das x erfolgreich aus M: $x = Z_{k_n}^{-1}(M)$.

**Threshold, Sicherheitskonstante $\Psi$**

Viele sicherheitskritische Systeme haben einen bestimmten Grenzwert, einen sogenannten Threshold, bis zu dem ihre Sicherheit nicht gefährdet werden kann. Das Geheimnis einer sicheren $k_n$-fachen Zerlegung $Z_{k_n}(x)$ kann beispielsweise nicht gelüftet werden, wenn nur bis zu n-1 Teile von $Z_{k_n}(x)$ zur Verfügung stehen. Für die Geheimhaltung von x ist n-1 der Threshold, bei dem die Sicherheit noch intakt ist.

Für diese Erfindung kommen Verfahren wie die sichere $k_n$-fache Zerlegung zum Einsatz, die einen solchen Threshold besitzen.

Um ein einheitliches Niveau für die Sicherheit im Gesamtsystem zu beschreiben, wird die ganzzahlige **Sicherheitskonstante** $\Psi$ als einheitlicher Threshold definiert. $\Psi$ muss auf jeden Fall größer gleich zwei sein. Die Wahl von $\Psi$ bestimmt die erzielbare Sicherheit, aber eventuell auch den erforderlichen Aufwand maßgeblich.

## 2 Technisches Problem: Langfristig sicherer Nachrichtenaustausch in großen Netzwerken

### 2.1 Anforderung

In Computernetzwerken soll die Kommunikation oftmals geschützt und verlässlich erfolgen. Steht kein Kommunikationsweg mit hoher Ausfallsicherheit zur Verfügung, kann die geforderte Zuverlässigkeit einer Verbindung durch die parallele redundante Nutzung verschiedener Wege sichergestellt werden.

In der im Folgenden beschriebenen Erfindung geht es primär darum, die Geheimhaltung, Authentizität und Integrität von Nachrichten beim Austausch zwischen zwei beliebigen, zweifelsfrei identifizierbaren Beteiligten zu garantieren. Es muss sich also ein sicherer Kanal zwischen zwei beliebigen Beteiligten errichten lassen.

Manipulationen und Missbrauch müssen bis zu einem bestimmten Grad ausgeschlossen werden, um Vertrauen zu schaffen und Rechtsgültigkeit zu ermöglichen.

Soll die sichere Kommunikation langfristig garantiert werden können, muss dies mit einem Konzept geleistet werden, welches auch in Zukunft zweifelsfrei zur Verfügung stehen wird und welches auch auf unbestimmte Zeit einen praktikablen und sicheren Betrieb gewährleisten kann, unabhängig von der technischen Weiterentwicklung.

### 2.2 Das Problem in großen Netzwerken

Das Verfahren OTPP zur Erzeugung eines sicheren Kanals bietet die geforderten Sicherheitseigenschaften für eine dauerhaft und beliebig sichere Kommunikation. Allerdings müssen sich für den Einsatz von OTPP je zwei Beteiligte gegenseitig identifizieren und sie müssen vorab geheime Schlüssel sicher austauschen. Dies kann nur manuell geschehen und stellt einen erheblichen Aufwand dar.

Bei einigen wenigen Beteiligten sind die gegenseitigen Identitätsprüfungen und der manuelle Schlüsselaustausch zwischen allen Teilnehmern vielleicht zu bewältigen, aber in einem großen Netzwerk ist dies aufgrund des mit der Zahl der Beteiligten fast quadratisch steigenden manuellen Aufwands keine realistische Option.

Daher kann das Verfahren OTPP nur mit einigen wenigen Beteiligten praktikabel angewendet werden. In einem potenziell sehr großen Netzwerk ist es für sich genommen keine Lösung zur sicheren Kommunikation zwischen beliebigen Beteiligten.

## 3 Stand der Technik

### 3.1 Bestehende Verfahren mit "Vertrauensparteien"

Eine Möglichkeit zur sicheren Kommunikation zwischen zwei beliebigen Beteiligten in einem großen Computernetzwerk ist der Einsatz von zentralen Instanzen als "Vertrauensparteien". Nur gegenüber den "Vertrauensparteien" identifizieren sich die anderen Beteiligten und nur mit diesen tauschen sie manuell verlässlich bestimmte Informationen aus. Es gibt verschieden Lösungen mit unterschiedlichen Vor- und Nachteilen:

#### Symmetrische Verfahren: Vermittlung, Schlüsselserver

Von der Idee her einfach ist die Inline-Vermittlung des gesamten Datenverkehrs durch eine "Vertrauenspartei": Jeder einfache Beteiligte tauscht mit der "Vertrauenspartei" jeweils einen exklusiven geheimen Schlüssel aus, sodass jeder Beteiligte mit der "Vertrauenspartei" einen sicheren Kanal etwa per OTPP aufbauen kann.

Eine Nachricht zwischen zwei einfachen Beteiligten Alice und Bob wird über einen sicheren Kanal zunächst von Alice an die "Vertrauenspartei" gesendet und von dieser dann wiederum über einen sicheren Kanal an Bob übermittelt. Der Nachteil dieser Lösung ist, dass der gesamte Datenverkehr über das System der "Vertrauenspartei" fließen muss und dort jeweils ein aufwendiges Entschlüsseln, Prüfen und neu Verschlüsseln ansteht.

Eine Alternative besteht im Online-Austausch von geheimen Schlüsseln. Dazu wird von der "Vertrauenspartei" ein zentraler Schlüsselserver betrieben, der für jeden neuen Verbindungsaufbau zwischen zwei einfachen Beteiligten Alice und Bob kontaktiert werden muss, um einen neuen, zufälligen und geheimen Schlüssel generieren zu lassen. Dieser ermöglicht Alice und Bob dann den Aufbau eines exklusiven sicheren Kanals. Kerberos nutzt beispielsweise dieses Verfahren [18].

Beim Einsatz von OTPP ist ein Schlüsselserver aufgrund der erforderlichen Schlüssellängen nicht effizienter als die Inline-Vermittlung. Verschlüsselungen mit kürzeren Schlüsseln können eventuell mit künftiger Technik gebrochen werden. Auch die Lösung mit Online-Schlüsselserver ist für jeden neuen Verbindungsaufbau auf die Erreichbarkeit eines zentralen Systems angewiesen.

#### Asymmetrische Verfahren: Public-Key-Infrastruktur (PKI)

Eine potenziell weniger zentrale und flexiblere Alternative bietet die Public-Key-Infrastruktur (PKI). Dabei werden durch "Vertrauensparteien" vergebene Zertifikate (etwa X.509, [8]) eingesetzt, wobei asymmetrische Verschlüsselungsverfahren (etwa RSA [20]) zum Einsatz kommen. Ein Vergleich mit Schlüsselservern findet sich in [14].

Bisher ist kein beweisbar sicheres asymmetrisches Verschlüsselungsverfahren bekannt. Von der Existenz irgendeines in der Praxis sicheren asymmetrischen Verschlüsselungsverfahren kann für die Zukunft nicht ausgegangen werden:

> Es ist durchaus möglich, dass etwa mit Hilfe von Quantencomputern oder durch neue Algorithmen auf herkömmlichen Computern in 50 Jahren jedes potenzielle asymmetrische Verfahren tatsächlich gebrochen werden kann. Für Verfahren, die auf der Berechnung von diskreten Logarithmen oder der Faktorisierung beruhen, wurden bereits theoretische Lösungen präsentiert [24] und diese wurden für kleine Zahlen auch bereits erfolgreich umgesetzt [17]. Post-quantum cryptography ist deshalb ein wichtiges aktuelles Forschungsgebiet [4].

Werden etwa zur Erzeugung der Signaturen in den Zertifikaten potenziell unsichere Hash-Funktionen eingesetzt, entstehen eventuell zusätzliche Angriffspunkte: Als reales Beispiel für einen fatalen Angriff auf eine PKI sei hier auf [25] verwiesen, wobei eine bekannt gewordene Schwäche der MD5-Hashfunktion genutzt wurde.

In der Praxis wird hybrid verschlüsselt, also kommen zusätzlich noch symmetrische Verschlüsselungsverfahren mit wieder verwendbaren Schlüsseln (wie etwa AES) zum Einsatz, die prinzipiell ebenfalls gebrochen werden können. Wie realistisch auch diese Gefährdung ist, zeigen die jüngsten Erfolge der Kryptoanalyse [5].

Es besteht also eine Abhängigkeit von gleich mehreren potenziellen Angriffspunkten - und es genügt, einen dieser Punkte erfolgreich zu attackieren, um das Gesamtverfahren zu brechen.

Soll für ein Netzwerk die korrekte, verlässliche und sichere Funktionalität auch auf unbegrenzte Zeit hin gewährleistet werden können, so ist eine Public-Key-Infrastruktur derzeit kein geeignetes Konzept.

**Das Grundproblem des Konzepts "Vertrauenspartei"**

In der Praxis ist eine wirklich neutrale, sich immer und gegenüber allen korrekt verhaltende "Vertrauenspartei" schwer zu realisieren und zu kontrollieren. Die Macht, welche die "Vertrauenspartei" hat, macht sie zum attraktiven Ziel für Manipulationen und Angriffe.

Während sich vielleicht in speziellen Angelegenheiten in begrenztem Rahmen durchaus neutrale und korrekte "Vertrauensparteien" schaffen lassen, scheint dies für universelle und weltweite Einsatzzwecke eine Utopie zu sein [14].

**3.2 Bestehende Verfahren mit Vertrauensnetzwerken**

Eine Alternative zum Einsatz von "Vertrauensparteien" ist die Nutzung von "Vertrauensnetzwerken" (Web of trust, wie es beispielsweise in OpenPGP zum Einsatz kommt [6]). Damit lässt sich jedoch keine Rechtsgültigkeit erzielen. Außerdem kommen wiederum asymmetrische Verschlüsselungstechniken zum Einsatz, es gelten also die gleichen Vorbehalte für die langzeitliche Verfügbarkeit dieser Technik wie bei der PKI.

Weitere Probleme ergeben sich aus den hohen Anforderungen an die Benutzer, welche entscheiden müssen, wem sie ihr Vertrauen aussprechen und ab wann sie einem nicht persönlich Bekannten trauen wollen. Neue Beteiligte, denen zunächst noch niemand sein Vertrauen ausgesprochen hat, müssen erstmal eine bestimmte Anzahl von Signaturen einholen, bevor sie kommunizieren können.

**Lässt sich Vertrauen überhaupt übertragen?**

Sowohl in einer hierarchischen PKI als auch in einem "Vertrauensnetzwerk" wird die Transitivität von Vertrauen einfach vorausgesetzt. Aber ist dies überhaupt korrekt?

**3.3 Verfahren mit Secret-Sharing**

Wie oben bereits erwähnt, ist Secret-Sharing ein weiteres bekanntes Verfahren, um einzelnen Parteien nicht vertrauen zu müssen, indem die Verantwortung auf mehrere Parteien aufgeteilt wird. Das kann u. a. dazu verwendet werden, Geheimnisse (etwa Schlüssel) sicher zu speichern.

Die unmittelbare Nutzung von Secret-Sharing zur perfekt sicheren und zuverlässigen Kommunikation (Perfectly Secure Message Transmission, PSMT) zwischen einem Sender und einem Empfänger über disjunkte Wege wird in [10] vorgeschlagen, in [19] findet sich eine optimierte Version und es gibt weitere Veröffentlichungen mit Verbesserungsvorschlägen speziell bezüglich der Effizienz, beispielsweise [15]. Diese PSMT-Verfahren unterscheiden sich schon von der Zielvorstellung her vom hier gezeigten Ansatz: Der Fokus liegt bei diesen Arbeiten darauf, sichere und zuverlässige Kommunikation auch bei einer bestimmten Anzahl von t Störern und zusätzlich von m Abhörern zu ermöglichen. Dabei werden vollständig getrennte Kommunikationskanäle (wires) zwischen Sender und Adressat einfach vorausgesetzt. Woher die disjunkten Wege kommen, wie die Kanäle geschützt werden, wie manipulative Kooperationen mit mehr als t+m Angreifern praxistauglich verhindert werden können oder wie die Identitäten von Sender und Empfänger geprüft werden sollen, wie also Vertrauen geschaffen werden kann, bleibt dabei völlig offen.

In [1] findet sich ein dynamisches Verfahren zum Berechnen von disjunkten Kommunikationswegen für PSMT - da jedoch nur eine Disjunktion der Leitungen (modelliert als Kanten eines Graphen), nicht aber eine Disjunktion der Knoten (modelliert als Ecken eines Graphen) der Verbindungswege erzielt wird, erfüllt dieses Verfahren nicht die Anforderungen von PSMT und es bietet auch keine Lösung für das im Rahmen der Erfindung behandelte Problem.

Es gibt Patente, die Secret-Sharing direkt in der Kommunikation einzusetzen. In dem Patentdokumenten [EP2116956 (A1), WO2008096608 (A1)] wird ein Verfahren beschrieben, bei dem ein Teil einer Secret-Sharing Zerlegung der zu übermittelnden Nachricht manuell auf einem gegenständlichen Datenträger vom Absender zum Adressaten gebracht wird, während die anderen Teile über unsichere Netzwerkverbindungen elektronisch ausgetauscht werden können.

Die Patentschriften [US6182214 (B1), WO0041357 (A1)] beschreiben ebenfalls den Einsatz von Secret-Sharing auf zu übermittelnde Nachrichten. Es wird dabei jedoch kein Verfahren zur strengen und praxistauglichen Trennung der einzelnen Teilstücke der Zerlegung auf dem Weg vom Absender zum Adressaten erzielt. Das Verfahren bietet daher für sich nicht die geforderte Sicherheit in der Kommunikation.

Die Patentschrift DE 19740333 beschreibt ein Verfahren zur Übertragung von verschlüsselten Nachrichten.

## 4 Beschreibung von Ausführungsformen

Im Folgenden werden Ausführungsformen der Erfindung beispielhaft beschrieben.

### 4.1 Spezielle Anforderungen an das Netzwerk

Um das im Folgenden gezeigte Verfahren zur sicheren Kommunikation einsetzen zu können, kann das zugrunde liegende Netzwerk folgende Eigenschaften haben:

**Es sollte sich um ein statisches Netzwerk handeln.**

Ein informationstechnisches Computernetzwerk ist genau dann ein **statisches Netzwerk**, wenn es langfristig ausgerichtet ist und dabei die folgenden Regeln gelten:

- Die logische Adressierung der einzelnen Systeme in einem statischen Computernetzwerk muss dauerhaft, absolut und eindeutig erfolgen. Änderungen der einmal vergebenen Adressen sind nicht zulässig.
- Auf logischer Ebene müssen einmal zu dem statischen Netzwerk gehörende Systeme dauerhaft in dem Netzwerk verfügbar gehalten werden und sie müssen alle in endlicher Zeit anhand der logischen Adressen miteinander kommunizieren können. Es dürfen im laufenden Betrieb nur neue Systeme hinzugefügt werden, sonst darf die logische Struktur nicht verändert werden. Fällt ein System aus oder wird die Kommunikation unterbrochen, so müssen entsprechende Maßnahmen zur Reparatur und zur Restauration in endlicher Zeit eingeleitet werden.

**Jeder S-Knoten sollte genau einen S-Betreiber haben.**

Ein eigenständig adressierbares Computersystem in einem für diese Erfindung geeigneten statischen Netzwerk wird im Folgenden auch als **S-Knoten** bezeichnet. Für jeden S-Knoten muss es genau eine verantwortliche natürliche oder juristische Person geben, den **S-Betreiber.** Es sei B die Menge aller S-Betreiber eines Netzwerks.

Im Folgenden werden exemplarisch die Begriffe S-Knoten und S-Betreiber verwendet, die Erfindung kann jedoch auch in anderen Netzwerken eingesetzt werden. S-Knoten kann allgemeiner durch die Bezeichnung "eigenständig adressierbares Computersystem" ersetzt werden, S-Betreiber durch "für ein eigenständig adressierbares Computersystem verantwortliche Person".

**Es muss eine Partition des Netzwerks in Misstrauensparteien MP geben.**

Eine Partition eines Netzwerks ist dessen Aufteilung in nicht leere disjunkte Teilmengen, im Folgenden auch "Parteien" genannt, so dass die Vereinigung aller Teilmengen genau das gesamte Netzwerk ergibt.

In einem statischen Netzwerks mit den zuvor geforderten speziellen Eigenschaften für S-Knoten und S-Betreiber ergibt sich eine Partition durch die Aufteilung der Menge B in nicht leere disjunkte Teilmengen, im Folgenden auch Parteien genannt, so dass die Vereinigung aller Teilmengen genau B ergibt. Gehört ein S-Betreiber zu einer bestimmten Partei, so gehören auch seine S-Knoten zu dieser Partei.

Für diese Erfindung wird eine Partition des Netzwerks in verschiedene Parteien vorausgesetzt.

Zusätzlich müssen sich je zwei beliebige Personen aus verschiedenen Parteien jeweils misstrauen. Misstrauen kann etwa durch eine strikte geografische, rechtliche sowie kulturelle Trennung zwischen den Personen aus verschiedenen Parteien erzeugt werden und es können bestimmte Formen der Kooperation über die Grenzen einer Partei hinweg verboten sowie durch geeignete Gegenmaßnahmen aktiv verhindert werden.

Ist das gegeben, so handelt es sich um eine **Partition eines Netzwerks in Misstrauensparteien MP**. Einzelne Parteien werden im Folgenden auch als Misstrauensparteien bezeichnet und als $MP_i$ notiert.

### 4.2 Partitions-Routing

#### Bekannte und parteigetreue Weiterleitung

Zwei S-Knoten heißen **Bekannte**, wenn zwischen ihnen Nachrichten direkt symmetrisch verschlüsselt übermittelt werden können, so dass dabei die Authentizität, die Geheimhaltung und die Integrität unmittelbar mit beliebig hoher Sicherheit gewährleistet werden können. Zwischen zwei Bekannten muss dazu (etwa mit OTPP) ein sicherer Kanal aufgebaut werden können.

Die S-Betreiber von Bekannten überprüfen gegenseitig die Identitäten der Systeme bzw. ihrer Besitzer und tauschen die notwendigen Verbindungsdaten (geheime Schlüssel) aus. Dies soll manuell geschehen und stellt einen erheblichen, sicherheitskritischen Aufwand dar. Die S-Betreiber sind auch dafür verantwortlich, dass die Bekannten garantieret in endlicher Zeit sicher miteinander kommunizieren können, sie müssen dazu bilateral Möglichkeiten für die Datenübertragung schaffen.

Realistischeiweise kann jeder S-Knoten nur einige wenige Bekannte haben. Jeder S-Knoten $S_x$ soll für jede Misstrauenspartei $MP_i$ jeweils mindestens einen anderen zu $MP_i$ gehörenden S-Knoten als Bekannten erhalten, so dass die Identität von $S_x$ durch S-Betreiber aus allen Misstrauensparteien geprüft wird. Viel mehr als eine Bekanntschaft pro MP soll nicht nötig sein, damit der Aufwand praktikabel niedrig bleibt.

Nur Bekannte können und dürfen direkt miteinander kommunizieren. Sind zwei S-Knoten keine Bekannten, so kann trotzdem eine Nachricht zwischen ihnen ausgetauscht werden, wenn es eine Folge von jeweils paarweise miteinander bekannten S-Knoten zwischen ihnen gibt und die Nachricht jeweils von Bekanntem zu Bekanntem weitergeleitet wird. Eine solche Verbindung heißt **Weiterleitung**, die weiterleitenden S-Knoten zwischen **Absender und Adressat** sind **Vermittler**.

Zwischen zwei S-Knoten besteht eine **Verbindungsmöglichkeit** genau dann, wenn sie Bekannte sind oder wenn es mindestens eine Weiterleitung zwischen ihnen gibt. Für diese Erfindung wird gefordert, dass es zwischen je zwei beliebigen S-Knoten eine Verbindungsmöglichkeit geben muss.

Anders als bei der direkten Verbindung zweier Bekannter kann bei der Weiterleitung die Nachricht jedoch nicht einfach über einen durchgehenden sicheren Kanal geschickt werden, da keine Schlüssel zwischen Absender und Adressat ausgetauscht wurden - sie wissen voneinander nicht mal, ob es den vermeintlichen Kommunikationspartner überhaupt gibt.

Um trotzdem sicher und verlässlich kommunizieren zu können, wird zunächst das Konzept der **parteigetreuen Weiterleitung** eingeführt:

> Wenn es zwischen zwei S-Knoten eine Weiterleitung in der Form gibt, dass alle vermittelnden S-Knoten zur gleichen Misstrauenspartei $MP_i$ gehören wie der Absender und der Adressat, so handelt es sich um eine parteigetreue Weiterleitung.

Für diese Erfindung wird gefordert, dass je zwei beliebige zur selben $MP_i$ gehörige S-Knoten entweder Bekannte sein müssen oder dass es eine parteigetreue Weiterleitung zwischen ihnen geben muss. Das bedeutet, dass alle zu $MP_i$ gehörenden S-Knoten untereinander Verbindungsmöglichkeiten haben müssen, die ganz ohne Systeme auskommen, die nicht zu $MP_i$ gehören.

Erreicht werden kann das beispielsweise durch eine ringförmige Anordnung aller zu einer $MP_i$ gehörenden S-Knoten bezüglich der Bekanntschaften - jeder S-Knoten hat in seiner eigenen Partei dann genau zwei Bekannte. Grundsätzlich sind aber auch andere Netzwerktopologien verwendbar, die nicht ringförmig sind.

#### Protokoll fürs Partitions-Routing

Die folgende Ausführungsform des Verfahrens wird insbesondere im Zusammenhang mit der Fig. 1 erläutert.

Es sei x die Bitfolge der zu übermittelnden Daten zwischen zwei einander nicht bekannten S-Knoten $S_A$ und $S_B$. Für die sichere Kommunikation kann dann das folgende Protokoll verwendet werden:

1. **Vorbereitung und sichere Zerlegung**: Der Absender $S_A$ erzeugt die Nachricht $m_0$ bestehend aus einem zufälligen One-Time-Pad Schlüssel $K_R$ mit der Länge von x, der Verschlüsselung $E_{K_R}(x)$ und Prüfdaten $P_0$ über $K_R \circ E_{K_R}(x)$. Also:

$$m_0 = K_R \circ E_{K_R}(x) \circ P_0(K_R \circ E_{K_R}(x))$$

Es sei: $k \in \mathbb{N}_0 \wedge k \geq \Psi + 1$ und: n = $\Psi$+1.
$S_A$ bildet $Z_{k_n}(m_0) = \{T_{k_n0}(m_0), \ldots, T_{k_nk-1}(m_0)\}$
Es sei $A_B$ die Adresse des Adressaten $S_B$.

$S_A$ generiert die Teilnachrichten tp: $t_p = A_B \circ T_{k_np}(m_0) \quad \forall\, p \in \mathbb{N}_0 | p < k$

2. **Aufteilung:** Jede Teilnachricht $t_p$ wird von $S_A$ zur Weitervermittlung über einen sicheren Kanal (etwa mit OTPP) an einen Bekannten von $S_A$ versendet, der zu einer anderen MP gehört als $S_A$ und $S_B$, wobei in keine andere MP mehr als ein Teilstück von $Z_{k_n}(m_0)$ gelangen darf.

3. **Überprüfung und Weiterleitung:** Jeder vermittelnde S-Knoten $S_x$ entschlüsselt und prüft auf sicheren Kanälen eingehende Nachrichten auf Korrektheit.

Stammt die Nachricht von einem Bekannten, der zu einer anderen MP gehört als $S_x$, so ist dieser Bekannte der Absender $S_A$ und der Vermittler fügt der Nachricht eine Identitätsbestätigung $I_{Ap}$ für $S_A$ als Beglaubigung der Authentizität hinzu. Stammt eine Nachricht von einem Bekannten, der zur gleichen MP gehört, wie der aktuelle Vermittler $S_x$, so muss sie bereits ein $I_{Ap}$ enthalten.

S-Knoten haben die Aufgabe, jedes nicht für sie bestimmte gültige Teilstück $t_p$ zusammen mit $I_{Ap}$ in Richtung des Adressaten $S_B$ weiterzuleiten. Dabei sind zwei Möglichkeiten zu unterscheiden:

3.1 Der Adressat $S_B$ ist dem Vermittler $S_x$ unbekannt.
$S_x$ leitet $t_p$ zusammen mit $I_{Ap}$ über einen sicheren Kanal (etwa mit OTPP) an einen Bekannten von $S_x$ weiter, der zur gleichen MP gehört wie der aktuelle Vermittler $S_x$, so dass die Nachricht möglichst näher hin zu einem Bekannten des Adressaten $S_B$ gelangt (siehe "Vorausschauendes parteigetreues Routing" im Abschnitt 4.3). Für diesen Bekannten wird wiederum Schritt 3 ausgeführt.
3.2 Der Adressat $S_B$ ist ein Bekannter des Vermittlers $S_x$.
In diesem Fall wird $t_p$ zusammen mit $I_{Ap}$ von $S_x$ über einen sicheren Kanal (etwa mit OTPP) direkt an den Adressaten $S_B$ gesendet.
4. **Überprüfung und Sammlung der Teile:** Der Adressat $S_B$ entschlüsselt und prüft von Bekannten auf sicheren Kanälen eingehende Nachrichten.
$S_B$ extrahiert $T_{k_np}(m_0)$ aus $t_p$. Zusammen mit der Information, aus welcher MP sie eingetroffen sind, werden die Teilstücke $T_{k_np}(m_0)$ und die zugehörigen $I_{Ap}$ gespeichert.
5. **Rekonstruktion und Überprüfung von $m_0$:** Wenn beim Adressaten $S_B$ mindestens n=$\Psi$+1 verschiedene Teilstücke $T_{k_np}(m_o)$ aus der Menge $Z_{k_n}(m_0)$ zusammen mit übereinstimmenden Identitätsbestätigungen $I_{Ap}$ aus ebenso vielen verschiedenen Misstrauensparteien gesammelt sind, lässt sich daraus $m_0$ rekonstruieren.

Die Integrität von $m_0$ wird anhand der Prüfdaten $P_0$ geprüft. Die Originaldaten x können durch Entschlüsselung mit dem in $m_0$ enthaltenen Schlüssel $K_R$ aus dem ebenfalls in $m_0$ enthaltenen $E_{K_R}(x)$ gewonnen werden.

Kein S-Knoten außer dem Absender und dem Adressaten hat im regulären Betrieb bei diesem Verfahren die Chance, mehr als ein Teilstück der sicheren Zerlegung $Z_{k_n}(m_0)$ zu erhalten:

In Schritt 2 werden alle Teilstücke $T_{k_np}(m_0)$ auf S-Knoten aufgeteilt, die zu verschiedenen Misstrauensparteien gehören, wobei alle S-Knoten einer jeden $MP_i$ zusammen höchstens ein Teilstück erhalten.

Die Weiterleitungen in Schritt 3.1 zwischen einem Bekannten von $S_A$ und einem Bekannten von $S_B$ sind parteigetreu. Alle Teilstücke bleiben also in der $MP_i$, der sie in Schritt 2 überantwortet wurden. Da kein S-Knoten zu mehr als einer MP gehören kann, wird auch kein S-Knoten zum Vermittler von zwei oder mehr verschiedenen Teilstücken der sichern Zerlegung.

Nur bei Schritt 3.2 kommen alle Teile von $Z_{k_n}(m_0)$ wieder in eine einzige MP, genauer direkt zu ein und demselben S-Knoten, aber dies ist genau der Adressat $S_B$.

Es müssen mindestens n=$\Psi$+1 S-Knoten in mindestens N=$\Psi$+1 verschiedenen Misstrauensparteien in einen Angriff einbezogen werden, um an den Inhalt der sicheren Zerlegung gelangen zu können oder um diesen Inhalt gezielt und unerkannt manipulieren zu können.

Ist k=2*Ψ+1, so sind auch zur Verhinderung der erfolgreichen Übermittlung einer Nachricht zwischen $S_A$ und $S_B$ mindestens Ψ+1 Unterbrechungen von Weiterleitungen in eben so vielen verschiedenen Misstrauensparteien erforderlich.

Ein potenzieller Vermittler bekommt nur von Schritt 2 Nachrichten aus fremden Misstrauensparteien, welche er weitervermitteln muss. Daher weiß ein S-Knoten eindeutig, wann er ein erster Vermittler ist. Da der erste Vermittler ein Bekannter des Absenders $S_A$ ist und mithin dessen Identität kennt, kann er eine Identifikationsbestätigung $I_{Ap}$ erstellen und somit die Authentizität von $t_p$ beglaubigen.

Der Absender verlangt mindestens Ψ+1 Identifikationsbestätigungen $I_{Ap}$ direkt von Bekannten aus Ψ+1 verschiedenen Misstrauensparteien. Für erfolgreiche Manipulationen sind wiederum mindestens Ψ+1 sich nicht korrekt verhaltende S-Knoten in ebenso vielen verschiedenen Misstrauensparteien notwendig.

Fig. 1 zeigt eine Ausführungsform für ein Partitions-Routing mit Ψ=2 und $k \geq n = 3$. $MP_i$ und $MP_j$ dürfen gleich sein, $MP_u$, $MP_v$ und $MP_w$ müssen aber von diesen und voneinander verschieden sein.

**4.3 Optimierte Vermaschung für iteratives Partitions-Routing**

Parteiintern benötigt jeder S-Knoten in der bisher präsentierten dezentralen ringförmigen Struktur nur zwei Bekannte. Rein theoretisch sind damit die geforderten parteigetreuen Weiterleitungen zwischen je zwei beliebigen S-Knoten einer MP möglich. Für eine reale Umsetzung ergeben sich jedoch zwei wesentliche Probleme:

1. Die Effizienz ist niedrig, da parteigetreue Weiterleitungen sehr lang werden können. Im Extremfall muss eine Nachricht im regulären Betrieb die Hälfte aller S-Knoten in einer MP durchlaufen. Bei Tausenden oder gar Millionen Systemen pro MP ist das nicht praktikabel, zumal bei jeder Weiterleitung auch ein aufwendiges Entschlüsseln, Prüfen und das erneute Verschlüsseln anfallen.

2. Die Ausfallsicherheit ist schlecht. Sind nur zwei S-Knoten in einer MP temporär für ihre parteiinternen Bekannten nicht erreichbar, so kann dies schon zur Trennung der übrigen S-Knoten dieser Partei in zwei Segmente R und Q führen, sodass auch alle parteigetreuen Weiterleitungen zwischen einem beliebigen S-Knoten aus R und einem beliebigen S-Knoten aus Q unterbrochen sind.

Die Robustheit gegenüber Ausfällen kann in Kommunikationsnetzwerken allgemein durch eine verstärkte Vermaschung mit mehreren redundanten Verbindungswegen erhöht werden, so dass im Störungsfall auf alternative Routen ausgewichen werden kann [2].

Durch die Vermehrung der parteiinternen Bekanntschaften lassen sich alternative Routen für die parteigetreuen Weiterleitungen gewinnen. Mehr Bekanntschaften bedeuten jedoch auch einen größeren manuellen Aufwand. Mit einer nur moderat erhöhten Anzahl von parteiinternen Bekanntschaften pro S-Knoten lässt sich bei geschickter Wahl der zusätzlichen Bekannten und durch den Einsatz eines geeigneten Routing-Verfahrens in der Praxis eine gute Ausfallsicherheit erzielen.

Damit ist es zugleich möglich, die durchschnittliche Länge der effizientesten parteigetreuen Weiterleitungen zwischen zwei beliebigen zur selben MP gehörenden S-Knoten praxistauglich kurz zu halten. Die hier präsentierte Lösung bleibt dabei vollständig dezentral.

**Parteiinterne Ordnung**

Für die Optimierung sollen die Adressen der S-Knoten eine speziell geeignete Form haben, aus der sich für die Menge der zu den S-Knoten einer bestimmten MP gehörenden Adressen jeweils eine totale Ordnung ergibt. Es bietet sich der Einsatz von natürlichen Zahlen für diese parteiinterne Adressierung an. Eine komplette Adresse kann dann ein Paar aus zwei natürlichen Zahlen sein - eine Nummer dient der Identifikation der MP, zu welcher der S-Knoten gehört, und die andere Zahl ist für die parteiinterne Adressierung bestimmt.

Anhand der totalen Ordnung der Adressen in einer jeden MP können die zugehörigen S-Knoten jeweils pro MP sortiert werden.

Im Folgenden wird wieder von einer ringförmigen Anordnung der S-Knoten in einer MP ausgegangen, wobei jeder S-Knoten auch zunächst wieder genau zwei Bekannte hat, nur dass die S-Knoten eben anhand der parteiinternen Adressen sortiert sind. Jeder S-Knoten erhält als Bekannte den mit der nächstkleineren und den mit der nächstgrößeren parteiinternen Adresse - sofern es einen solchen S-Knoten jeweils gibt. Außerdem sind in jeder MP die beiden S-Knoten mit der kleinsten und der größten parteiinternen Adresse Bekannte.

Die Ringdistanz $R(S_A, S_B)$ zwischen zwei beliebigen zu derselben MP gehörenden S-Knoten $S_A$ und $S_B$ ist genau die Anzahl der S-Knoten, welche auf dem sortierten Ring in der kürzeren Richtung zwischen $S_A$ und $S_B$ liegen.

Das Ziel für die Einführung weiterer parteiinterner Bekanntschaften lautet:

Eine Nachricht von einem beliebigen Absender $S_A$ an einen beliebigen Adressaten $S_B$ in derselben MP soll parteigetreu so weitergeleitet werden können, dass entweder bei jedem Vermittlungsschritt vom aktuellen S-Knoten $S_{alt}$ zum nächsten S-Knoten $S_{neu}$ das $R(S_{neu}, S_B)$ im Vergleich zu $R(S_{alt}, S_B)$ mindestens um den Quotienten aus $R(S_{alt}, S_B)$ als Dividend und einem konstanten Divisor $d \mid d \in \mathbb{N}_1 \wedge d > 1$ reduzierte wird, oder dass $S_B$ ein Bekannter von $S_{alt}$ ist und dass $S_B$ daher von $S_{alt}$ aus direkt erreicht werden kann. Für jeden Schritt kann in einer Ausführungsform mithin gelten:

$$R(S_{neu}, S_B) \leqslant R(S_{alt}, S_B) - \frac{R(S_{alt}, S_B)}{d}$$

Das Ziel ist also ein iteratives Näherungsverfahren. Bei d=2 ergibt sich in jedem Vermittlungsschritt mindestens eine Halbierung der noch zu überwindenden Ringdistanz. Bei d=4 wird pro Schritt immerhin noch mindestens um ein Viertel reduziert.

Es sei $\#(MP_i)$ die Anzahl der S-Knoten, die zu $MP_i$ gehören. Dann ergibt sich die maximale Anzahl von Vermittlern in der kürzesten möglichen parteigetreuen Weiterleitung zwischen zwei beliebigen einander nicht bekannten S-Knoten, die zu $MP_i$ gehören, aus der Formel:

$$\text{AnzahlVermittler}_i \leqslant (d-1) * \lceil \log_d(\#(MP_i)) \rceil$$

Um das zu ermöglichen, benötigt ein beliebiger S-Knoten in $MP_i$ parteiintern nicht mehr als $2^*(\log_d (\#(MP_i)))$ Bekanntschaften, sofern diese gut verteilt gewählt sind. Die Anzahl der höchstens erforderlichen Vermittler ist für d=2 minimal, dafür werden aber parteiintern pro S-Knoten relativ viele Bekannte benötigt. Da das Herstellen einer Bekanntschaft eine aufwendige Aktion ist, kann es sinnvoll sein, die Konstante d höher zu wählen und dafür längere Weiterleitungen in Kauf zu nehmen.

Wann sind Bekanntschaften gut verteilt? Theoretisch dann, wenn ein S-Knoten immer genau all jene S-Knoten als parteiinterne Bekannte hat, zu denen er eine Ringdistanz $(d^f-1)$ mit $f \in \mathbb{N} \wedge f < \lceil \log_d(\#(MP_i)) \rceil$ von aufweist.

In Fig. 2 ist dieser Zusammenhang dargestellt. Die kleinen Kreise symbolisieren die S-Knoten einer MP. Die fetten Linien stehen für die optimalen parteiinternen Bekanntschaften eines S-Knotens $S_x$ mit d = 2. Die Zahlen entsprechen jeweils der Ringdistanz der S-Knoten zu $S_x$.

Da sich die Ringdistanzen laufend durch das Hinzufügen neuer S-Knoten ändern können und der manuelle Aufwand des Herstellens von Bekanntschaften hoch ist, soll zur Optimierung zwischenzeitlich eine gute Annäherung an die perfekte Verteilung mit möglichst dauerhaften Bekannten genügen.

Wichtig ist schließlich auch, dass ein S-Knoten aus seinen Bekannten anhand der parteiinternen Adressierung den bestmöglichen nächsten Vermittler für eine weiterzuleitende Nachricht auswählen können muss.

**Hinzufügen von S-Knoten und von parteiinternen Bekanntschaften**

Die folgende Ausführungsform weist ein iteratives Verfahren zum Schaffen neuer S-Knoten, vergibt die Adressen innerhalb von einer MP und stellt die optimierten parteiinternen Bekanntschaften her.

Es werden die Konstante $d \in \mathbb{N}_1 \wedge d > 1$ und eine Obergrenze für die parteiinterne Adressierung in der Form $d^z \mid z \in \mathbb{N}_1$ festgelegt.

Es sei $\alpha$ eine Variable für die aktuelle parteiinterne Adresse. Es sei r eine Zählvariable für die Anzahl der absolvierten Runden. Initialisiert wird r mit 1.

1. **Initialisierung:** Der erste S-Knoten erhält die parteiinterne Adresse $\alpha$ = 0. Es sind noch keine parteiinternen Bekanntschaften herzustellen. Alle weiteren S-Knoten werden rundenweise eingefügt.

2. **Inkrementierung von** $\alpha$: Solange es einen S-Knoten mit der parteiinternen Adresse $\alpha$ schon gibt, wird $\alpha$ um $d^z \div d^r$ erhöht.

3. **Auf neue Runde prüfen:** Wenn $\alpha \geq d^z$ ist, dann wird r um eins inkrementiert und $\alpha = d^z \div d^r$ gesetzt.

4. **Einfügen:** Ein neuer S-Knoten $S_{i\alpha}$ mit der parteiinternen Adresse $\alpha$ wird eingefügt.

5. **Herstellen der Bekanntschaften:** $S_{i\alpha}$ soll für jedes $f \in \mathbb{N}_1 | f \leqslant r$ einen S-Knoten mit der parteiinternen Adresse $\beta_+ = (\alpha + d^f) \bmod d^z$ und einen S-Knoten mit der parteiinternen Adresse $\beta_- = (\alpha - d^f) \bmod d^z$ als parteiinternen Bekannten bekommen.

Zu unterscheiden sind jeweils zwei Fälle:

5.1 Es gibt schon einen S-Knoten mit der parteiinternen Adresse $\beta_\pm$ in $MP_i$. Dann wird dieser S-Knoten zum Bekannten, die Bekanntschaft ist bereits **optimal.**

5.2 Sonst gibt noch keinen S-Knoten mit der geforderten parteiinternen Adresse $\beta_\pm$ in MPi. Die **Adressdistanz** $\Delta(\varphi,\chi)$ zwischen zwei parteiinternen Adressen $\varphi$ und $\chi$ sei definiert als: $\Delta(\varphi,\chi) = \min(\{\mathrm{abs}(\varphi-(\chi+q*d^z)) | q \in \mathbb{Z}\})$ Dann wird der S-Knoten $S_{i\gamma}$, zum **suboptimalen vorläufigen Bekannten**, dessen parteiinterne Adresse $\gamma$ das kleinste $\Delta(\gamma, \beta_\pm)$ von allen S-Knoten in $MP_i$ besitzt, welche eine kleinere Adressdistanz zu $\alpha$ als $\Delta(\beta_\pm, \alpha)$ haben. Für den nächsten einzufügenden S-Knoten geht es weiter mit Schritt 2.

**Hinweis:** Am Ende jeder Runde, wenn r inkrementiert wird, hat jeder S-Knoten alle perfekt verteilten Bekannten. Wenn ein bestehender S-Knoten $S_b$ der optimale Bekannte eines neu hinzugefügten S-Knotens $S_x$ wird, so kann dadurch ein suboptimaler vorläufiger Bekannter von $S_b$ überflüssig geworden sein. Überflüssige vorläufige Bekanntschaften können wieder aufgelöst werden (müssen sie jedoch nicht).

Im Durchschnitt werden pro S-Knoten in $MP_i$ nicht mehr als zusammengenommen $3 * \lceil \log_d (\#(MP_i)) \rceil$ optimale und suboptimale Bekanntschaften geschlossen.

**Vorausschauendes parteigetreues Routing**

Beim parteigetreuen Routing einer Nachricht muss jeder Vermittler, der kein Bekannter des Adressaten $S_B$ ist, den besten nächsten Vermittler aus seinen Bekannten auswählen und die Nachricht an diesen weiterleiten. In einem wie zuvor gezeigt konstruierten Netzwerk ist der beste nächste Vermittler genau der Bekannte, dessen parteiinterne Adresse die kleinste Adressdistanz zur parteiinternen Adresse von $S_B$ hat.

Ist von einem S-Knoten $S_E$ aus der Bekannte $S_F$, welcher der nächste optimale Vermittler wäre, nicht erreichbar, kann bis zur Wiederherstellung der Erreichbarkeit von $S_F$ auf andere Vermittler ausgewichen werden. Die alternative Route der parteigetreuen Weiterleitung muss nicht unbedingt weniger effizient sein als die ursprünglich versuchte Variante. Eine optimale Alternative ist aber schwieriger zu finden, da einen Schritt weiter vorausgeschaut werden muss.

Es sei M eine Menge von S-Knoten, die zu $MP_i$ gehören. Es sei B(M) die Menge der Bekannten aller S-Knoten aus M, die auch zu $MP_i$ gehören. Dann ist der S-Knoten $S_O$ aus $B(B(\{S_E\}) \setminus S_F)$ das nächste optimale Weiterleitungsziel, dessen parteiinterne Adresse die geringste Adressdistanz zur parteiinternen Adresse von $S_B$ hat.

Im linken Teil der Fig. 3 ist links (1) die Störung der optimalen Weiterleitung von $S_E$ zu $S_B$ durch den Ausfall von $S_E$ dargestellt. Wird daraufhin zum Bekannten der nächstgeringen Ringdistanz zu $S_B$ weitergeleitet (mittlere Darstellung, 2), sind doppelt so viele Schritte erforderlich wie beim vorausschauenden Routing (rechts im Bild, 3).

Es sei $S_U$ ein Bekannter vom Adressaten $S_B$. Ist das Ziel $S_B$ selbst von $S_U$ aus nicht erreichbar, so kann eine parteigetreue Weiterleitung über die anderen parteiinternen Bekannten von $S_B$ versucht werden. Jeder S-Knoten der Menge $B(\{S_B\}) \setminus S_U$ ist ein möglicher alternativer Vermittler und kann als vorläufiges Ziel angesteuert werden. Die Anzahl an Ausweichmöglichkeiten steigt logarithmisch mit zunehmender Anzahl an S-Knoten: Jeder S-Knoten in $MP_i$ hat zwischen *R* -1 1 und *R**2-1 verschiedene parteiinterne Bekannte als Alternativen, wobei $R = \lceil \log_d(\#(MP_i)) \rceil$ ist.

**Parteiübergreifende Bekanntschaften**

Beim Nachrichtenaustausch zwischen zwei einander nicht bekannten S-Knoten $S_A$ und $S_B$ nach dem Partitions-Routing-Protokoll werden für jede Teilnachricht zwischen dem ersten und dem letzten Vermittler jeweils nur parteigetreue Weiterleitungen verwendet. Für ein effizientes Routing ist es erforderlich, in jeder vermittelnden MP einen Bekannten von $S_B$ als letzten Vermittler ausfindig zu machen, um diesen dann als temporäres Ziel der parteigetreuen Weiterleitung optimal ansteuern zu können.

Dazu sollen jeweils jene S-Knoten in verschiedenen Misstrauensparteien, welche die gleiche parteiinterne

Adresse $\chi$ haben, paarweise miteinander bekannt sein. Gibt es in einer Misstrauenspartei $MP_i$ noch keinen S-Knoten mit der gleichen parteiinternen Adresse $\chi$, so muss mit dem zu $MP_i$ gehörigen S-Knoten eine suboptimale vorläufige Bekanntschaft hergestellt werden, welcher die nächstkleinere parteiinterne Adresse als $\chi$ hat. Wird später ein S-Knoten mit der Adresse $\chi$ zu $MP_i$ hinzugefügt, wird dieser zum optimalen Bekannten und die vorläufige Bekanntschaft wird überflüssig.

Prinzipiell ist wiederum möglich, bestehende vorläufige parteiübergreifende Bekanntschaften durch neue vorläufige Bekanntschaften zu ersetzen, sobald es bezüglich der parteiinternen Adresse besser liegende S-Knoten gibt. Das führt zu optimal kurzen Weiterleitungen und ermöglicht ein einfaches Routing. Doch das Schließen von Bekanntschaften ist aufwendig. Günstiger scheint es wiederum zu sein, vorläufige Bekanntschaften nur einmalig durch optimale Bekanntschaften zu ersetzt.

**Protokoll für parteiübergreifendes Routing**

Folgende Ausführungsform des Verfahrens dient dazu, eine Nachricht m, die ein Teilstück des Partitions-Routing-Protokolls enthält, vom Absender $S_{i\alpha}$, der zu $MP_i$ gehört, effizient zum Adressaten $S_{j\beta}$ zu übermitteln, welcher zu $MP_j$ gehört und die parteiinterne Adresse $\beta$ hat. Dabei muss es mindestens einen Vermittler geben und alle Vermittler müssen zu einer bestimmten Misstrauenspartei $MP_v$ gehören. $MP_v$ muss von $MP_i$ und von $MP_j$ verscheiden sein.

Es sei $S_{v*}$ eine Variable für den aktuell vermittelnden S-Knoten in $MP_v$.

1. **Erste Vermittlung:** Zunächst sendet $S_{i\alpha}$ m an einen Bekannten $S_{v*}$, der zu $MP_v$ gehört. Ist $S_{v*}$ auch ein Bekannter von $S_{j\beta}$, kann das Ziel von hier aus direkt über einen sicheren Kanal erreicht werden. Ende.

2. **Suche nach dem optimalen Bekannten von $S_{j\beta}$:** Sonst wird versucht, einen S-Knoten $S_{v\beta}$, der zu $MP_v$, gehört und der die parteiinterne Adresse $\beta$ hat, mit dem vorausschauenden parteigetreuen Routing (s. o.) zu erreichen. Existiert $S_{v\beta}$, kann $S_{j\beta}$ von $S_{v\beta}$ aus direkt über einen sicheren Kanal erreicht werden. Ende.

3. **Abschlussschritt**: $S_{v*}$ wird auf den S-Knoten gesetzt, der in $MP_v$ die größte parteiinterne Adresse kleiner als $\beta$ hat. Hat das erfolglose vorausschauende parteigetreue Routing nicht bei $S_{v*}$ geendet, sondern bei $S_{v\chi}$, wird m von $S_{v\chi}$ an $S_{v*}$ gesendet, was immer direkt über einen sicheren Kanal möglich sein muss, da $S_{v\chi}$ nur ein Bekannter von $S_{v*}$ sein kann.

**Suche nach einem suboptimalen vorläufigen Bekannten von $S_{j\beta}$:**

4. Wenn $S_{v*}$ ein Bekannter von $S_{j\beta}$ ist, ist $S_{j\beta}$ von $S_{v*}$ aus direkt über einen sicheren Kanal erreichbar und m wird darüber an $S_{j\beta}$ gesendet. Ende.

5. Wenn $S_{v*}$ die parteiinterne Adresse 0 hat, gibt es keine Bekannten von $S_{j\beta}$ in $MP_v$. $S_{v*}$ sendet eine Meldung an $S_{i\alpha}$, dass die Zustellung von m nicht möglich sei. Ende.

6. Es sei $\Phi(S_{x\chi})$ eine Funktion, welche die Runde r, in der ein S-Knoten $S_{x\chi}$ zu seiner $MP_x$ hinzugefügt wurde, anhand der parteiinternen Adresse $\chi$ berechnet: $\Phi(S_{x\chi})$ liefert die kleinste natürliche Zahl r für die gilt:

$$\chi \bmod d^{(z-r)} = 0 \wedge r > 0$$

$S_{v*}$ leitet m über einen sicheren Kanal an den zu $MP_v$ gehörigen Bekannten $S_{v\nu}$ mit der nächstkleineren parteiinternen Adresse weiter, für den gilt: $\Phi(S_{v\nu}) \leq \Phi(S_{v*})$ .Dieser Bekannte $S_{v\nu}$ wird das neue $S_{v*}$. Weiter mit Schritt 4.

In Fig. 4 ist die Suche nach einem Bekannten von $S_{j\beta}$ in $MP_v$ dargestellt: Die S-Knoten $S_{v\gamma}$, $S_{v\pi}$, $S_{v\mu}$ und $S_{v\sigma}$ wurden in einer späteren Runde hinzugefügt - sie kommen nach der Prüfung von $S_{v\varphi}$ bzw. $S_{v\nu}$ nicht mehr als Bekannte von $S_{j\beta}$ in Frage und werden übersprungen.

Im störungsfreien Betrieb des optimierten Partitions-Routings ist die Anzahl der notwendigen Vermittlungen des gesamten streng auf k Misstrauensparteien aufgeteilten Nachrichtenaustausches mit der sicheren Zerlegung $Z_{kn}$ $(m_0)$ begrenzt auf:

$$\text{AnzahlVermittler} \leqslant \sum_{i=0}^{k-1} (2*(d-1)*\lceil \log_d(\#(MP_i)) \rceil + 3)$$

Um Ausfallsicherheit zu erzielen, kann außerdem die Anzahl der Bekannten mit jeder fremden MP für jeden einzelnen S-Knoten erhöht werden. Andererseits kann, wenn die Sicherheitskonstante $\Psi$ klein gegenüber der Anzahl der Misstrauensparteien ist, im Fall einer Störung auch komplett auf andere Misstrauensparteien ausgewichen werden. Oder es kann von vorneherein für das $Z_{k_n}$ das k > n gewählt werden. Zusätzliche Redundanz mit weiteren parteiübergreifenden Bekanntschaften ist also unnötig.

Es sei c die Anzahl der Misstrauensparteien. Insgesamt kommt ein praxistauglicher S-Knoten, der zu $MP_i$ gehört, im optimierten Betrieb also mit folgender Anzahl Bekannter aus:

$$\text{AnzahlBekannteInsgesamt}_i \leqslant 2*\lceil \log_d(\#(MP_i)) \rceil + c - 1$$

Können nicht sofort optimale Bekanntschaften hergestellt werden, so werden zusätzlich maximal noch einmal so viele vorläufige Bekanntschaften pro S-Knoten geschlossen - im Durchschnitt aber nur halb so viele. Der Aufwand ist damit insgesamt praktikabel niedrig.

Mit den beschriebenen Auführungsformen der Erfindung kann eine dauerhaft beliebig sichere Verbindung zwischen zwei Beteiligten eines großen Netzwerks aufgebaut werden, wobei:

- Die benötigten kryptografischen Konzepte garantiert auch langfristig und nach beliebiger technischer Weiterentwicklung mit unverminderter Sicherheit zur Verfügung stehen. Selbst wenn zunächst effiziente, aber nicht beweisbar sichere Verschlüsselungsalgorithmen mit wiederverwendbaren Schlüsseln zum Erzeugen von sicheren Kanälen eingesetzt werden, kann jederzeit ohne grundlegende Änderung etwa auf das Verfahren OTPP umgestiegen werden. Auf Konzepte mit asymmetrischer Verschlüsselung trifft das allgemein nicht zu.
- Rechtssicherheit erzielt werden kann, obwohl keiner einzelnen Partei vertaut werden muss und keine Transitivität von Vertrauen vorausgesetzt wird. Für eine erfolgreiche Manipulation müssen mindestens $\Psi$+1 beteiligten Systemen bzw. Betreiber in verschiedenen sich misstrauenden Parteien eingebunden werden.

Effizienz, vollständige Dezentralität und daher gute Skalierbarkeit geboten werden.

Der Einsatz dieser Erfindung ist erst in Netzwerken ab einer gewissen Größenordnung sinnvoll und alle Betreiber in verschiedenen Misstrauensparteien sind direkt am gezeigten Verfahren beteiligt sowie rechtlich gebunden. Es ist daher kaum denkbar, dass eine relevante praktische Nutzung dieser Erfindung nicht bekannt wird.

## 5 Beispielhaftes technisches Anwendungsgebiet

### Verlässliche Veröffentlichung

Eine verlässliche Veröffentlichung von beliebigen Daten x liegt genau dann vor, wenn x für das Zielpublikum für einen bestimmten Gültigkeitszeitraum zugänglich sowie lesbar gemacht wird und dabei die folgende Eigenschaften gewährt werden:

- Die nachstehenden Zusatzdaten z werden bei der Publikation erhoben und lassen sich fortan rechtsgültig feststellen:
- Der (oder die) Herausgeber der Veröffentlichung
- Das Zielpublikum, also die Festlegung der Leseberechtigten (auch frei für alle möglich)
- Der Gültigkeitszeitraum (auch unbegrenzt möglich)
- Der Publikationszeitpunkt
- Der Publikationsort
- Bis zum Ende der Gültigkeitszeit müssen x und z unverändert erhalten bleiben.
- Auf x und z muss mit einem universellen und konstanten Identifikationsmerkmal ID eineindeutig verwiesen werden können.
- Für den Gültigkeitszeitraum und für das gesamte vorab festgelegte Zielpublikum muss anhand der ID der lesende Zugriff auf x und z in endlicher Zeit möglich sein.

**S-Netzwerk**

Das **S-Netzwerk** ist ein geplantes Medium, welches genau verlässliche Veröffentlichungen ermöglichen soll. Da sich die Eigenschaften einer verlässlichen Veröffentlichung nicht rein informationstechnisch realisieren lassen, beinhaltet das S-Netzwerk auch eine starke rechtliche Verankerung.

Von der Idee her werden im S-Netzwerk zu veröffentlichende Inhalte sicher zerlegt und alle Teilstücke einer solchen Zerlegung werden in einem in Misstrauensparteien partionierten statischen Computernetzwerk mehrfach redundant gespeichert, wobei in keiner MP mehr als eine Kopie eines Teilstücks hinterlegt werden darf.

Die einzelnen S-Knoten dieses Computernetzwerks müssen dazu miteinander sicher und verlässlich kommunizieren können.

Bei dieser Erfindung wird genau die statische Netzwerkstruktur mit Partition in Misstrauensparteien vorausgesetzt, die beim S-Netzwerk ohnehin benötigt wird - inklusive rechtlicher Verankerung. Die eingesetzten kryptografischen Verfahren, speziell das Secret Sharing, kommen ohnehin auch im S-Netzwerk zum Einsatz.

Durch die Nutzung dieser Erfindung werden bei der Absicherung der Kommunikation keine zusätzlichen potenziellen Angriffspunkte geschaffen. Es kann langfristig genau der Sicherheits-Threshold garantiert werden, der durch die Anzahl der Sicherungskopien im S-Netzwerk überhaupt erreicht werden kann.

Das S-Netzwerk bildet ein universelles Basismedium für signifikante Publikationen, rechtsgültige Hinterlegungen und zur Langzeitarchivierung. Anwendungsmöglichkeiten sind z. B. Fair-Contract-Signing, Fair-Non-Repudiation, Abstimmungen.

**Literaturverzeichnis**

[1]: Amitabha Bagchi, Amitabh Chaudhary, Michael T. Goodrich, Shouhuai Xu; Constructing Disjoint Paths for Secure Communication; Lecture Notes in Computer Science, 2003, Volume 2848/2003; Springer Verlag Berlin 2003; Seite(n): 181-195; am 21.2.2011 im Internet erreichbar unter: http://www.cse.iitd.ernet.in/~bagchi/disc03.pdf

[2]: Paul Baran; On Distributed Communications Networks; RAND Corporation Santa Monica 1962; am 25.1.2010 im Internet verfügbar unter: http://www.rand.org/pubs/papers/P2626

[3]: C.H. Bennett, G. Brassard; Quantum Cryptography: Public Key Distribution and Coin Tossing; Proceedings of IEEE International Conference on Computers Systems and Signal Processing, Bangalore India; 1984; Seite(n): 175-179;

[4]: Daniel J. Bernstein; Post-quantum cryptography; Springer-Verlag Berlin 2008; ISBN 978-3-540-88701-0

[5]: Alex Biryukov, Dmitry Khovratovich; Related-key Cryptanalysis of the Full AES-192 and AES-256; Cryptology ePrint Archive 2009; am 2.2.2011 im Internet erreichbar unter: http://eprint.iacr.org/2009/317

[6]: J. Callas et al.; RFC 4880: OpenPGP Message Format; The Internet Society 2007; am 2.2.2011 im Internet erreichbar unter: http://tools.ietf.org/html/rfc4880

[7]: The College of Information Sciences and Technology; CiteSeerX beta; Pennsylvania State University 2011; am 22.2.2011 im Internet erreichbar unter: http://citeseerx.ist.psu.edu/

[8]: D. Cooper et al.; RFC 5820: Internet X.509 Public Key Infrastructure Certificate and Certificate Revocation List (CRL) Profile; The Internet Society 2008; am 2.2.2011 im Internet erreichbar unter: http://tools.ietf.org/html/rfc5280

[9]: Joan Daemen, Vincent Rijmen; The design of Rijndael: AES - the advanced encryption standard; Springer Verlag Berlin 2002; ISBN 3-540-42580-2

[10]: D. Dolev, C. Dwork, O. Waarts, M. Yung; Perfectly secure message transmission; 31st Annual Symposium on Foundations of Computer Science (FOCS 1990) 1990; am 21.2.2011 im Internet erreichbar unter: http://www.computer.org/portal/web/csdl/doi/10.1109/FSCS.1990.89522

[11]: D. Eastlake 3rd, T. Hansen et al.; RFC 4634: Secure Hash Algorithms (SHA and HMAC-SHA); The Internet Society 2006; am 2.2.2011 im Internet erreichbar unter: http://tools.ietf.org/html/rfc4634

[12]: European Patent Office; Register Plus; EPO 2011; am 8.2.2011 im Internet erreichbar unter: https://register.epoline.org

[13]: esp@cenet Portal; Worldwide patent database; Europe's network of patent databases 2011; am 8.2.2011 im Internet erreichbar unter: http://www.espacenet.com

[14]: Niels Ferguson, Bruce Schneier, Tadayoshi Kohno; Cryptography Enineering; Wiley Publishing, Inc. Indianapolis 2010; ISBN: 978-0-470-47424-2

[15]: Matthias Fitzi, Matthew Franklin, Juan Garay and S. Harsha Vardhan; Towards Optimal and Efficient Perfectly Secure Message Transmission; Lecture Notes in Computer Science, 2007, Volume 4392/2007; Springer Verlag Berlin 2007; Seite(n): 311-322; am 22.2.2011 im Internet erreichbar unter: http://www.springerlink.com/content/ah255638733h1g75/fulltext.pdf

[16]: Google; Google Suche; Google Inc., Mountain View, CA 94043, USA 2011; am 22.2.2011 im Internet erreichbar unter: http://www.google.de/

[17]: IBM Research Division; IBM's Test-Tube Quantum Computer Makes History; First Demonstration Of Shor's Historic Factoring Algorithm; ScienceDaily 2001; am 2.2.2011 im Internet erreichbar unter: http://www.sciencedaily.com/releases/2001/12/011220081620.htm

[18]: J. Kohl, C. Neuman; RFC 1510: The Kerberos Network Authentication Service; Massachusetts Institute of Technology 1993; am 2.2.2011 im Internet erreichbar unter: http://www.ietf.org/rfc/rfc1510.txt

[19]: Kaoru Kurosawa, Kazuhiro Suzuki; Truly Efficient 2-Round Perfectly Secure Message Transmission Scheme; IEEE Transactions on Information Theory, v.55 n.11; 2009; Seite(n): 5223 - 5232;

[20]: RSALaboratories; PKCS #1 v2.1: RSA Cryptography Standard; RSA Security Inc. 2002; am 2.2.2011 im Internet erreichbar unter: ftp://ftp.rsasecurity.com/pub/pkcs/pkcs-1/pkcs-1v2-1.pdf

[21]: Bruce Schneier, John Kelsey, Doug Whiting, David Wagner, Chris Hall, Niels Ferguson ; The Twofish Encryption Algorithm: A 128-Bit Block Cipher; John Wiley & Sons New York 1999; ISBN 978-0471353812

[22]: Adi Shamir; How to share a secret; Communications of the ACM Volume 22 Issue 11; ACM New York 1979; Seite(n): 612-613;

[23]: C. E. Shannon; Communication theory of secrecy systems; Bell System Technical Journal 28; Bell Labs 1949; Seite(n): 656 - 715;

[24]: Peter W. Shor; Polynomial time algorithms for prime factorization and discrete logarithms on a quantum computer; Bell Labs 1994; Preliminary version appeared in Proc. of 35th Annual Symp. on Foundations of Computer Science, Santa Fe, NM, Nov 20-22, 1994. Final version published in SIAM J. Computing 26 (1997) 1484; am 7.7.2010 im Internet verfügbar unter: http://arxiv.org/abs/quant-ph/9508027v2

[25]: Alexander Sotirov, Marc Stevens, Jacob Appelbaum, Arjen Lenstra, David Molnar, Dag Arne Osvik, Benne de Weger; MD5 considered harmful today: Creating a rogue CA certificate; 25th Annual Chaos Communication Congress in Berlin 2008; am 15.12.2010 im Internet erreichbar unter: http://www.win.tue.nl/hashclash/rogue-ca/

[26]: Springer-Verlag GmbH; SpringerLink; Springer Verlag Heidelberg, Berlin 2011; am 22.2.2011 im Internet erreichbar unter: http://www.springerlink.com/

**Patentansprüche**

1. Verfahren zur sicheren Datenübertragung zwischen einem beliebigen Absender ($S_A$) und einem beliebigen Adressaten ($S_B$), die über ein Computernetzwerk (1) miteinander verbunden sind, wobei das Computernetzwerk (1) Parteien ($MP_{i,}$, $MP_u$, $MP_v$, $MP_w$, $MP_j$) aufweist, wobei die Parteien disjunkte Teilmengen eigenständig adressierbarer Computersysteme des Computernetzwerks (1) sind, und

a) eine zu übermittelnde Nachricht ($m_0$) durch Secret Sharing in $k \in \mathbb{N}$ Teilnachrichten ($t_p$) aufgeteilt wird, sodass $n \in \mathbb{N}$ Teilnachrichten ($t_p$) benötigt werden, um die zu übermittelnde Nachricht Nachricht ($m_0$) daraus rekonstruieren zu können,
b) die Teilnachrichten ($t_p$) nur an eigenständig adressierbare Computersysteme ($S_x$) zur Vermittlung über sichere Kanäle in verschiedenen Parteien ($MP_u$, $MP_v$, $MP_w$) übertragen werden, zu denen ein sicherer Kanal aufbaubar ist und welche im Folgenden auch Bekannte genannt werden, und in keine Partei ($MP_u$, $MP_v$, $MP_w$) mehr als eine Teilnachricht ($t_p$) gelangen kann,
c) jedes eigenständig adressierbare Computersystem zur Vermittlung ($S_x$) prüft die über einen sicheren Kanal von einem Bekannten eintreffende Teilnachricht ($t_p$) und fügt einer korrekten Teilnachricht ($t_p$) eine Authentizitätskennung ($I_{Ap}$) hinzu,
d1) wenn zwischen einem eigenständig adressierbaren Computersystem zur Vermittlung ($S_x$) und dem Adressaten ($S_B$) kein sicherer Kanal aufbaubar ist, so wird die korrekte Teilnachricht ($t_p$) zusammen mit der zugehörigen korrekten Authentizitätskennung ($I_{Ap}$) an ein anderes eigenständig adressierbares Computersystem zur Vermittlung ($S_{xNeu}$) in der gleichen Partei ($MP_u$, $MP_v$, $MP_w$) über einen sicheren Kanal weitergeleitet, wobei der Schritt d1) durch dieses andere eigenständig adressierbare Computersystem zur Vermittlung ($S_{xNeu)}$ nach der Prüfung auf Korrektheit erneut ausgeführt wird,
d2) wenn zwischen einem eigenständig adressierbaren Computersystem zur Vermittlung ($S_x$) und dem Adressat ($S_B$) ein sicherer Kanal aufbaubar ist, so wird die korrekte Teilnachricht ($t_p$) zusammen mit der zugehörigen korrekten Authentizitätskennung ($I_{Ap}$) über diesen sicheren Kanal an den Adressaten ($S_B$) übertragen,
e) der Adressat ($S_B$) prüft alle Teilnachrichten ($t_p$), die er zusammen mit den zugehörigen Authentizitätskennungen ($I_{Ap}$) von eigenständig adressierbaren Computersystemen zur Vermittlung ($S_x$) über sichere Kanäle erhalten hat und speichert sie zusammen mit einer eindeutigen Kennzeichnung der Partei ($MP_u$, $MP_v$, $MP_w$), aus der er sie erhalten hat,
f) wenn der Adressat ($S_B$) mindestens n Teilnachrichten ($t_p$) zusammen mit übereinstimmenden zugehörigen Authentizitätskennungen ($I_{Ap}$) aus mindestens n verschiedenen Parteien ($MP_u$, $MP_v$, $MP_w$) korrekt erhalten hat, rekonstruiert er aus den Teilnachrichten ($t_p$) die Nachricht ($m_0$).

**2.** Verfahren nach Anspruch 1, **dadurch gekennzeichnet, dass** die Nachricht ($m_0$) vor der Secret Sharing Aufteilung mit einem Verschlüsselungsverfahren und / oder einer Prüfsumme versehen wird.

**3.** Verfahren nach Anspruch 2, **dadurch gekennzeichnet, dass** das Verschlüsselungsverfahren ein One-Pad Verschlüsselungsverfahren ist.

**4.** Verfahren nach Anspruch 1, **dadurch gekennzeichnet, dass** eine Integrität der Nachricht ($m_0$) nach Schritt 1.f) anhand von in der der Nachricht ($m_0$) enthaltenen Prüfdaten überprüft wird.

**5.** Verfahren nach Anspruch 1, **dadurch gekennzeichnet, dass** das eigenständig adressierbare Computersystem ($S_A$, $S_B$, $S_x$) eine Adresse aufweist, die neben einer Adresse innerhalb einer Partei ($MP_u$, $MP_v$, $MP_w$) auch eine Adresse der Partei ($MP_u$, $MP_v$, $MP_w$) selbst enthält.

**6.** Verfahren nach Anspruch 1, **dadurch gekennzeichnet, dass** für jedes eigenständig adressierbare Computersystem einer Partei ($MP_i$) ein sicherer Kanal zu genau zwei weiteren eigenständig adressierbaren Computersystemen aufbaubar ist, welche zu derselben Partei ($MP_i$) gehören und welche als Bekannte bezeichnet werden, sodass die Bekannten aller Computersysteme in einer Partei ($MP_i$) eine zusammenhängende Ringstruktur bilden.

**7.** Verfahren nach Anspruch 5, **dadurch gekennzeichnet, dass** die Adressen von eigenständig adressierbaren Computersystemen innerhalb einer Partei ($MP_i$) eine totale Ordnung aufweisen.

**8.** Verfahren nach den Ansprüchen 7, **dadurch gekennzeichnet, dass** jeweils genau jene eigenständig adressierbaren Computersysteme innerhalb einer Partei ($MP_i$) Bekannte sind, zwischen deren Adressen innerhalb der totalen Ordnung der Adressen der Partei ($MP_i$) keine weiteren Adressen liegen und dass außerdem die eigenständig adressierbaren Computersysteme mit der kleinsten und mit der größten Adresse innerhalb der totalen Ordnung der Adressen der Partei ($MP_i$) Bekannte sind.

**9.** Verfahren nach Anspruch 8, **dadurch gekennzeichnet, dass** anhand von Adressen der eigenständig adressier-

baren Computersysteme ($S_{x1}$, $S_{x2}$) eine Ringdistanz R($S_{x1}$, $S_{x2}$) zwischen zwei eigenständig adressierbaren Computersystemen ($S_{x1}$, $S_{x2}$) innerhalb einer Ringstruktur innerhalb einer Partei ($MP_i$) ermittelt wird, wobei die Übermittlung an ein neues eigenständig adressierbares Computersystem zur Vermittlung ($S_{xNeu}$) in Abhängigkeit von der Ringdistanz R($S_{x1}$, $S_{x2}$) bestimmt wird.

**10.** Verfahren nach Anspruch 5, **dadurch gekennzeichnet, dass** eigenständig adressierbare Computersysteme ($S_x$) zur Partei ($MP_i$) nach folgendem Verfahren hinzugefügt und mit einer Adresse in der Partei ($MP_i$) ausgestattet werden, wobei außerdem jene eigenständig adressierbaren Computersysteme ausgewählt werden, welche Bekannte werden und welche Identitätsprüfungen und einen Verbindungsdatentausch manuell durchführen, dabei sei d eine Konstante mit $d \in \mathbb{N}_1 \wedge d > 1$ und z sei eine Konstante für die $z \in \mathbb{N}_1$ gilt und es sei $\alpha$ eine Variable für die aktuelle Adresse in der Partei ($MP_i$) und es sei ferner r eine mit eins initialisierte ganzzahlige Variable,

a) das erste eigenständig adressierbare Computersystem ($S_x$) der Partei ($MP_i$) erhält die parteiinterne Adresse $\alpha = 0$ und es sind noch keine Bekanntschaften herzustellen,
b) solange es ein eigenständig adressierbares Computersystem ($S_x$) in der Partei ($MP_i$) mit der parteiinternen Adresse $\alpha$ schon gibt, wird $\alpha$ um $d^z$ / $d^r$ erhöht,
c) wenn $\alpha \geq d^z$ ist, dann wird r um eins inkrementiert und $\alpha = \frac{d^z}{d^r}$ gesetzt,
d) ein neues eigenständig adressierbares Computersystem ($S_{i\alpha}$) mit der parteiinternen Adresse $\alpha$ wird eingefügt,
e) das neue eigenständig adressierbare Computersystem ($S_{i\alpha}$) soll für jedes $f \in \mathbb{N}_1 | f \leq r$ ein eigenständig adressierbares Computersystem mit der parteiinternen Adresse $\beta_+ = (\alpha + d^f) \bmod d^z$ und ein eigenständig adressierbares Computersystem mit der parteiinternen Adresse $\beta_- = (\alpha - d^f) \bmod d^z$ als parteiinternen Bekannten bekommen, wobei jeweils für die Adresse $\beta_+$ und für die Adresse $\beta_-$ zwei Fälle zu unterscheiden sind,
f1) es gibt schon ein eigenständig adressierbares Computersystem ($S_{i\beta+}$ / $S_{i\beta-}$) mit der parteiinternen Adresse $\beta_+$ / $\beta_-$ in der Partei ($MP_i$), dann wird dieses eigenständig adressierbare Computersystem ($S_{i\beta+}$ / $S_{i\beta-}$) zum Bekannten des neuen eigenständig adressierbare Computersystems ($S_{i\alpha}$),
f2) es gibt noch kein eigenständig adressierbares Computersystem ($S_{i\beta+}$ / $S_{i\beta-}$) mit der parteiinternen Adresse $\beta_+$ / $\beta_-$ in der Partei ($MP_i$) und es sei die Adressdistanz $\Delta(\varphi,\chi)$ zwischen zwei parteiinternen Adressen $\varphi$ und $\chi$ in der Partei ($MP_i$) definiert als

$$\Delta(\varphi,\chi) = \min(\{\mathrm{abs}(\varphi - (\chi + q * d^z)) \mid q \in \mathbb{Z}\})$$

sodass dann das eigenständig adressierbare Computersystem ($S_{i\gamma}$) zum suboptimalen vorläufigen Bekannten des neuen eigenständig adressierbaren Computersystems ($S_{i\alpha}$) wird, dessen parteiinterne Adresse $\gamma$ das kleinste $\Delta(\gamma,\beta_+)$ / $\Delta(\gamma,\beta_-)$ von alle jenen eigenständig adressierbaren Computersystemen in der Partei ($MP_i$) besitzt, welche eine kleinere Adressdistanz zu $\alpha$ als $\Delta(\beta_+,\alpha)$ / $\Delta(\beta_-,\alpha)$ haben,
g) für das nächste einzufügende eigenständig adressierbare Computersystem geht es weiter mit Schritt b).

**11.** Verfahren nach Anspruch 1, **dadurch gekennzeichnet, dass** zur Vermittlung der Nachricht innerhalb einer Partei ($MP_i$), im Folgenden parteigetreues Routing genannt, jedes eigenständig adressierbare Computersystem zur Vermittlung ($S_x$), das kein Bekannter des Adressaten ($S_B$) ist, jeweils das beste nächste eigenständig adressierbare Computersystem zur Vermittlung ($S_{xNeu}$) aus seinen Bekannten auswählt und die Nachricht an diesen weiterleitt, wobei das beste nächste eigenständig adressierbare Computersystem zur Vermittlung ($S_{xNeu}$) genau der Bekannte des eigenständig adressierbaren Computersystems zur Vermittlung ($S_x$) ist, dessen parteiinterne Adresse die kleinste Adressdistanz zur parteiinternen Adresse des Adressaten ($S_B$) hat.

**12.** Verfahren nach Anspruch 11, **dadurch gekennzeichnet, dass** in jeder vermittelnden Partei ($MP_i$) ein Bekannter des Adressaten ($S_B$) als letzter Vermittler ausfindig gemacht wird, um diesen dann als temporäres Ziel des parteigetreuen Routings optimal ansteuern zu können, wobei jeweils jene eigenständig adressierbaren Computersysteme zur Vermittlung ($S_x$) in verschiedenen Parteien ($MP_i$), welche die gleiche parteiinterne Adresse $\chi$ haben, paarweise miteinander bekannt sein sollen, wobei für den Fall, dass es in einer Partei ($MP_i$) noch kein eigenständig adressier-

bares Computersystem mit der gleichen parteiinternen Adresse $\chi$ gibt, mit dem zu der Partei ($MP_i$) gehörigen eigenständig adressierbaren Computersystem eine suboptimale vorläufige Bekanntschaft hergestellt, welche in der der Partei ($MP_i$) die nächstkleinere parteiinterne Adresse als $\chi$ hat.

**13.** Verfahren nach Anspruch 12, **dadurch gekennzeichnet, dass** zur Übermittlung einer Teilnachricht ($t_p$) vom Absender $S_{i\alpha}$, der zu einer ersten Partei ($MP_i$) gehört, zum Adressaten $S_{j\beta}$, welcher zu einer zweiten Partei ($MP_j$) gehört und die parteiinterne Adresse $\beta$ hat, wobei es eine Reihe von paarweise miteinander Bekannten, zu einer dritten, von der ersten Partei ($MP_i$) und von der zweiten Partei ($MP_j$) verschiedenen Partei ($MP_v$) gehörenden eigenständig adressierbaren Computersystemen zur Vermittlung zwischen $S_{i\alpha}$ und $S_{j\beta}$ geben muss und $S_{v*}$ eine Variable für die aktuell vermittelnden eigenständig adressierbaren Computersysteme in der dritten Partei ($MP_v$) ist, folgende Schritte ausgeführt werden

a) zunächst sendet $S_{i\alpha}$ die Nachricht m über einen sicheren Kanal an einen Bekannten $S_{v*}$, der zu der dritten Partei ($MP_v$) gehört, und wenn dieses eigenständig adressierbare Computersystem $S_{v*}$ auch ein Bekannter des eigenständig adressierbaren Computersystems $S_{j\beta}$ ist, kann der Adressat von hier aus direkt über einen sicheren Kanal erreicht werden und das Verfahren ist beendet,
b) sonst wird versucht, ein eigenständig adressierbares Computersystem $S_{v\beta}$, das zur dritten Partei ($MP_v$) gehört und darin eine parteiinterne Adresse $\beta$ hat, mit dem vorausschauenden parteigetreuen Routing gemäß Anspruch 10 zu erreichen und wenn das eigenständig adressierbare Computersystem $S_{v\beta}$ existiert, kann das eigenständig adressierbare Computersystem $S_{j\beta}$ vom eigenständig adressierbaren Computersystem $S_{v\beta}$ aus direkt über einen sicheren Kanal erreicht werden und das Verfahren ist beendet,
c) sonst wird die Variable $S_{v*}$ auf das eigenständig adressierbare Computersystem gesetzt, das in der dritten Partei ($MP_v$) die größte parteiinterne Adresse kleiner als $\beta$ hat und wenn das erfolglose vorausschauende parteigetreue Routing gemäß Anspruch 10 nicht beim eigenständig adressierbaren Computersystem $S_{v*}$ geendet hat, sondern bei einem eigenständig adressierbaren Computersystem $S_{v\chi}$, wird die Nachricht m vom eigenständig adressierbaren Computersystem $S_{v\chi}$ über einen sicheren Kanal an das eigenständig adressierbare Computersystem $S_{v*}$ gesendet, was immer direkt möglich sein muss, da das Computersystem $S_{v\chi}$ nur ein Bekannter des eigenständig adressierbaren Computersystems $S_{v*}$ sein kann,
d) wenn das eigenständig adressierbare Computersystem $S_{v*}$ ein Bekannter des eigenständig adressierbaren Computersystems $S_{j\beta}$ ist, ist das eigenständig adressierbare Computersystem $S_{j\beta}$ vom Computersystem $S_{v*}$ aus direkt erreichbar und das Verfahren ist beendet,
e) wenn das eigenständig adressierbare Computersystem $S_{v*}$ die parteiinterne Adresse 0 hat, gibt es keine Bekannten des eigenständig adressierbaren Computersystems $S_{j\beta}$ in der dritten Partei ($MP_v$); das eigenständig adressierbare Computersystem $S_{v*}$ sendet eine Meldung an das eigenständig adressierbare Computersystem $S_{i\alpha}$, dass die Zustellung von m nicht möglich sei und das Verfahren ist beendet,
f) es sei $\Phi(S_{x\chi})$ eine Funktion, welche die kleinste natürliche Zahl r liefert für die gilt

$$\chi \bmod d^{(z-r)} = 0 \wedge r > 0$$

und das eigenständig adressierbare Computersystem $S_{v*}$ leitet die Nachricht m an das eigenständig adressierbare Computersystem $S_{vv}$ aus den zur dritten Misstrauenspartei ($MP_v$) gehörigen Bekannten von $S_{v*}$ über einen sicheren Kanal weiter, welches die nächstkleinere parteiinternen Adresse v hat und für welches gilt $\Phi(S_{vv}) \leq \Phi(S_{v*})$
und dieser Bekannte $S_{vv}$ wird das neue eigenständig adressierbare Computersystem $S_{v*}$, für den das Verfahren mit Schritt d) weitergeführt wird.

**14.** Datenübertragungssystem zur sicheren Datenübertragung zwischen einem beliebigen Absender ($S_A$) und einem beliebigen Adressaten ($S_B$), die über ein Computernetzwerk (1) miteinander verbunden sind, wobei das Computernetzwerk (1) Parteien ($MP_i$, $MP_u$, $MP_v$, $MP_w$, $MP_j$) aufweist, wobei die Parteien disjunkte Teilmengen eigenständig adressierbarer Computersysteme des Computernetzwerks (1) sind, und

a) einem Mittel zur Aufteilung einer zu übermittelnden Nachricht ($m_0$) durch Secret Sharing in $k \in \mathbb{N}$ Teilnachrichten ($t_p$) aufgeteilt wird, sodass $n \in \mathbb{N}$ Teilnachrichten ($t_p$) benötigt werden, um die Nachricht ($m_0$) daraus rekonstruieren zu können,

b) einem Vermittlungsmittel, mit dem Teilnachrichten ($t_p$) nur an eigenständig adressierbare Computersysteme ($S_x$) zur Vermittlung über sichere Kanäle in verschiedenen Parteien ($MP_u$, $MP_v$, $MP_w$) übertragen werden, zu denen ein sicherer Kanal aufbaubar ist und welche im Folgenden auch Bekannte genannt werden und in keine Partei ($MP_u$, $MP_v$, $MP_w$) mehr als eine Teilnachricht ($t_p$) gelangen kann,
c) einem Authentifizierungsmittel in jedem eigenständig adressierbaren Computersystem zur Vermittlung ($S_x$) zur Überprüfung der über einen sicheren Kanal von Bekannten eintreffende Teilnachricht ($t_p$) und zum Hinzufügen einer Authentizitätskennung ($I_{Ap}$) zu einer korrekten Teilnachricht ($t_p$),
d1) einem Übertragungsmittel zur Datenübertragung, mit dem, wenn zwischen einem eigenständig adressierbaren Computersystem zur Vermittlung ($S_x$) und dem Adressaten ($S_B$) kein sicherer Kanal aufbaubar ist, die korrekte Teilnachricht ($t_p$) zusammen mit der zugehörigen korrekten Authentizitätskennung ($I_{Ap}$) an ein anderes eigenständig adressierbares Computersystem zur Vermittlung ($S_{xNeu}$) in der gleichen Partei ($MP_u$, $MP_v$, $MP_w$) über einen sicheren Kanal weitergeleitet wird, wobei der Schritt d1) durch dieses andere eigenständig adressierbare Computersystem zur Vermittlung ($S_{xNeu}$) nach der Prüfung auf Korrektheit erneut ausgeführt wird,
d2) einem Übertragungsmittel zur Datenübertragung, mit dem, wenn zwischen einem eigenständig adressierbaren Computersystem zur Vermittlung ($S_x$) und dem Adressat ($S_B$) ein sicherer Kanal aufbaubar ist, die korrekte Teilnachricht ($t_p$) zusammen mit der zugehörigen korrekten Authentizitätskennung ($I_{Ap}$) über diesen sicheren Kanal an den Adressaten ($S_B$) übertragen wird,
e) einem Prüfmittel und Speichermittel, mit dem der Adressat ($S_B$) alle Teilnachrichten ($t_p$) prüft, die er zusammen mit den zugehörigen Authentizitätskennungen ($I_{Ap}$) von eigenständig adressierbaren Computersystemen zur Vermittlung ($S_x$) über sichere Kanäle erhalten hat und mit dem der Adressat (SB) Teilnachrichten ($t_p$) zusammen mit den zugehörigen Authentizitätskennungen ($I_{Ap}$), sofern sie die Prüfung bestehen, zusammen mit einer eindeutigen Kennzeichnung der Partei ($MP_u$, $MP_v$, $MP_w$) speichert, aus der er sie erhalten hat,
f) einem Rekonstruktionsmittel, mit dem der Adressat ($S_B$), wenn er mindestens n Teilnachrichten ($t_p$) zusammen mit übereinstimmenden zugehörigen Authentizitätskennungen ($I_{Ap}$) aus mindestens n verschiedenen Parteien ($MP_u$, $MP_v$, $MP_w$) korrekt erhalten hat, aus den Teilnachrichten ($t_p$) die Nachricht ($m_0$) rekonstruieren kann.

## Claims

**1.** A method for the secure data transmission between an arbitrary sender ($S_A$) and an arbitrary addressee ($S_B$), which are connected with each other via a computer network (1), wherein the computer network (1) includes parties ($MP_{i,}$, $MP_u$, $MP_v$, $MP_w$, $MP_j$), wherein the parties are disjoint subsets of independently addressable computer systems of the computer network (1), and

a) a message ($m_0$) to be transmitted is split up into $k \in \mathbb{N}$ submessages ($t_p$) by Secret Sharing, so that $n \in \mathbb{N}$ submessages ($t_p$) are required to be able to therefrom reconstruct the message ($m_0$) to be transmitted,
b) the submessages ($t_p$) only are transmitted to independently addressable computer systems ($S_x$) for switching via secure channels in different parties ($MP_u$, $MP_v$, $MP_w$) to which a secure channel can be set up and which in the following also are referred to as acquaintances, and wherein into no party ($MP_u$, $MP_v$, $MP_w$) more than one submessage ($t_p$) can get,
c) each independently, addressable computer systems for switching ($S_x$) checks the submessage ($t_p$) arriving from an acquaintance via a secure channel and adds an authenticity identifier ($I_{Ap}$) to a correct submessage ($t_p$),
d1) when between, an independently addressable computer system for switching ($S_x$) and the addressee ($S_B$) no secure channel can be set up, the correct submessage ($t_p$) together with the associated correct authenticity identifier ($I_{Ap}$) is forwarded to another independently addressable computer system for switching ($S_{xNew}$) in the same party ($MP_u$, $MP_v$, $MP_w$) via a secure channel, wherein step d1) is again executed by this other independently addressable computer system for switching ($S_{xNew}$) after checking the correctness,
d2) when between an independently addressable computer system for switching ($S_x$) and the addressee ($S_B$) a secure channel can be set up, the correct submessage ($t_p$) together with the associated correct authenticity identifier ($I_{Ap}$) is transmitted to the addressee ($S_B$) via this secure channel,
e) the addressee ($S_B$) checks all submessages ($t_p$) which it has received via secure channels together with the associated authenticity identifiers ($I_{Ap}$) from independently addressable computer systems for switching ($S_x$) and stores the same together with a unique identification of the party ($MP_u$, $MP_v$, $MP_w$) from which it has received the same,
f) when the addressee ($S_B$) has correctly received at least n submessages ($t_p$) together with matching associated authenticity identifiers ($I_{Ap}$) from at least n different parties ($MP_u$, $MP_v$, $MP_w$), it reconstructs the message ($m_0$) from the submessages ($t_p$).

**2.** The method according to claim 1, **characterized in that** before the Secret Sharing division the message ($m_0$) is provided with an encryption method and/or a check sum.

**3.** The method according to claim 2, **characterized in that** the encryption method is a one-pad encryption method.

**4.** The method according to claim 1, **characterized in that** after step 1.f) an integrity of the message ($m_0$) is checked with reference to check data contained in the message ($m_0$).

**5.** The method according to claim 1, **characterized in that** the independently addressable computer system ($S_A$, $S_B$, $S_x$) includes an address which beside an address within a party ($MP_u$, $MP_v$, $MP_w$) also contains an address of the party ($MP_u$, $MP_v$, $MP_w$) itself.

**6.** The method according to claim 1, **characterized in that** for each independently addressable computer system of a party ($MP_i$) a secure channel can be set up to precisely two further independently addressable computer systems which belong to the same party ($MP_i$) and which are referred to as acquaintances, so that the acquaintances of all computer systems in a party ($MP_i$) form a coherent ring structure.

**7.** The method according to claim 5, **characterized in that** the addresses of independently addressable computer systems within a party ($MP_i$) have a total order.

**8.** The method according to claim 7, **characterized in that** exactly those independently addressable computer systems within a party ($MP_i$) each are acquaintances between whose addresses within the total order of the addresses of the party ($MP_i$) no further addresses lie, and that in addition the independently addressable computer systems with the smallest and with the largest address within the total order of the addresses of the party ($MP_i$) are acquaintances.

**9.** The method according to claim 8, **characterized in that** with reference to addresses of the independently addressable computer systems ($S_{x1}$, $S_{x2}$) a ring distance $R(S_{x1}, S_{x2})$ between two independently addressable computer systems ($S_{x1}$, $S_{x2}$) within a ring structure within a party ($MP_i$) is determined, wherein the transmission to a new independently addressable computer system for switching ($S_{xNew}$) is determined in dependence on the ring distance $R(S_{x1}, S_{x2})$.

**10.** The method according to claim 5, **characterized in that** independently addressable computer systems ($S_x$) are added to the party ($MP_i$) and equipped with an address in the party ($MP_i$) by the following method, wherein in addition those independently addressable computer systems are selected, which become acquaintances and which manually carry out identity checks and an exchange of communication data, wherein d is a constant with $d \in \mathbb{N}_1 \wedge d > 1$

and z is a constant for which applies $z \in \mathbb{N}_1$

and wherein $\alpha$ is a variable for the current address in the party ($MP_i$), and wherein furthermore r is an integer variable initialized with unity,

a) the first independently addressable computer system ($S_x$) of the party ($MP_i$) obtains the party-internal address $\alpha = 0$ and no acquaintances must yet be made,
b) as long as an independently addressable computer system ($S_x$) in the party ($MP_i$) with the party-internal address $\alpha$ already does exist, $\alpha$ is increased by $d^z / d^r$,

c) when $\alpha \geq d^z$, r is incremented by one and $\alpha = \frac{d^z}{d^r}$ is set,

d) a new independently addressable computer system ($S_{i\alpha}$) with the party-internal address $\alpha$ is inserted,

e) for each $f \in \mathbb{N}_1 | f \leq r$ the new independently addressable computer system ($S_{i\alpha}$) will get an independently addressable computer system with the party-internal address $\beta_+ = (\alpha + d^f) \bmod d^z$ and an independently addressable computer system with the party-internal address $\beta_- = (\alpha - d^f) \bmod d^z$ as party-internal acquaintance, wherein two cases each are to be distinguished for the address $\beta_+$ and for the address $\beta_-$,
f1) if an independently addressable computer system ($S_{i\beta+}$ / $S_{i\beta-}$) with the party-internal address $\beta_+$ / $\beta_-$ in the party ($MP_i$) already does exist, this independently addressable computer system ($S_{i\beta+}$ / $S_{i\beta-}$) becomes the acquaintance of the new independently addressable computer system ($S_{i\alpha}$),

f2) if an independently addressable computer system ($S_{i\beta+}$ / $S_{i\beta-}$) with the party-internal address $\beta_+$ / $\beta_-$ in the party ($MP_i$) does not exist yet and the address distance $\Delta(\varphi,\chi)$ between two party-internal addresses $\varphi$ and $\chi$ in the party ($MP_i$) is defined as

$$\Delta(\varphi,\chi) = \min(\{abs(\varphi-(\chi+q*d^{\tau}))\,|q\in\mathbb{Z}\})$$

so that then the independently addressable computer system ($S_{i\gamma}$) becomes the suboptimal preliminary acquaintance of the new independently addressable computer system ($S_{i\alpha}$), whose party-internal address $\gamma$ possesses the smallest $\Delta(\gamma,\beta_+)$ / $\Delta(\gamma,\beta_-)$ of all those independently addressable computer systems in the party ($MP_i$) which have a smaller address distance to $\alpha$ than $\Delta(\beta,\alpha)$ / $\Delta(\beta_-,\alpha)$,

g) for the next independently addressable computer system to be inserted the process continues with step b).

**11.** The method according to claim 1, **characterized in that** for switching the message within a party ($MP_i$), in the following referred to as party-confoimal routing, each independently addressable computer system for switching ($S_x$), which is not an acquaintance of the addressee ($S_B$), each selects the best next independently addressable computer system for switching ($S_{xNew}$) from its acquaintances and forwards the message to the same, wherein the best next independently addressable computer system for switching ($S_{xNew}$) is exactly that acquaintance of the independently addressable computer system for switching ($S_x$) whose party-internal, address is the smallest address distance to the party-internal address of the addressee ($S_B$).

**12.** The method according to claim 11, **characterized in that** in each switching party ($MP_i$) an acquaintance of the addressee ($S_B$) is found as last agent, in order to then be able to optimally address the same as temporary target of the party-conformal routing, wherein those independently addressable computer systems for switching ($S_x$) in various parties ($MP_i$), which have the same party-internal address $\chi$, each should be acquainted to each other in pairs, wherein for the case that in one party ($MP_i$) an independently addressable computer system with the same party-internal address $\chi$ does not exist yet, a suboptimal preliminary acquaintance is made with the independently addressable computer system belonging to the party ($MP_i$), which in the party ($MP_i$) has the next smaller party-internal address than $\chi$.

**13.** The method according to claim 12, **characterized in that** for transmitting a submessage ($t_p$) from the sender $S_{i\alpha}$, which belongs to a first party ($MP_i$), to the addressee $S_{j\beta}$, which belongs to a second party ($MP_j$) and has the party-internal address $\beta$, wherein a number of independently addressable computer systems for switching between $S_{i\alpha}$ and $S_{j\beta}$ must exist, which are acquainted to each other in pairs arid belong to a third party ($MP_v$) different from the first party ($MP_i$) and from the second party ($MP_j$), and $S_{v*}$ is a variable for the currently switching independently addressable computer systems in the third party ($MP_v$), the following steps are carried out:

a) $S_{i\alpha}$ first of all sends the message m via a secure channel to an acquaintance $S_{v*}$ which belongs to the third party ($MP_v$), and when this independently addressable computer system $S_{v*}$ also is an acquaintance of the independently addressable computer system $S_{j\beta}$, the addressse can directly be reached from here via a secure channel, and the method is terminated,

b) otherwise it is attempted to reach an independently addressable computer system $S_{v\beta}$, which belongs to the third party ($MP_v$) and therein has a party-internal address $\beta$, with the forward-looking party-conformal routine according to claim 10, and when the independently addressable computer system $S_{v\beta}$ exists, the independently addressable computer system $S_{j\beta}$ can be reached directly from the independently addressable computer system $S_{v\beta}$ via a secure channel, and the method is terminated,

c) otherwise the variable $S_{v*}$ is set to the independently addressable computer system which in the third party ($MP_v$) has the largest party-internal address smaller than $\beta$, and when the unsuccessful forward-looking party-conformal routing according to claim 10 has not come to an end at the independently addressable computer system $S_{v*}$, but at an independently addressable computer system $S_{v\chi}$, the message m is sent from the independently addressable computer system $S_{v\chi}$ via a secure channel to the independently addressable computer system $S_{v*}$, which always must be possible directly, since the computer system $S_{v\chi}$ only can be an acquaintance of the independently addressable computer system $S_{v*}$,

d) when the independently addressable computer system $S_{v*}$ is an acquaintance of the independently addressable computer system $S_{j\beta}$, the independently addressable computer system $S_{j\beta}$ can be reached directly from the computer system $S_{v*}$, and the method is terminated,

e) when the independently addressable computer system $S_{v*}$ has the party-internal address 0, there are no acquaintances of the independently addressable computer system $S_{j\beta}$ in the third party ($MP_v$); the independently addressable computer system $S_{v*}$ sends a message to the independently addressable computer system $S_{i\alpha}$ that the delivery of the message m is not possible, and the method is terminated,

f) $\Phi(S_{x\chi})$ is a function which delivers the smallest natural number r, for which applies

$$\chi \bmod d^{(z-r)} = 0 \wedge r > 0$$

and the independently addressable computer system $S_{v*}$ forwards the message m via a secure channel to the independently addressable computer system $S_{vv}$ from the acquaintances of $S_{v*}$ belonging to the third non-confidence party ($MP_v$), which has the next smaller party-internal address v and for which applies $\Phi(S_{vv}) \leq \Phi(S_{v*})$ and this acquaintance $S_{vv}$ will be the new independently addressable computer system $S_{v*}$, for which the method is continued with step d).

**14.** A data transmission system for the secure data transmission between an arbitrary sender ($S_A$) and an arbitrary addressee ($S_B$), which are connected with each other via a computer network (1), wherein the computer network (1) includes parties ($MP_{i,}$, $MP_u$, $MP_v$, $MP_w$, $MP_j$), wherein the parties are disjoint subsets of independently addressable computer systems of the computer network (1), and

a) a means for splitting up a message ($m_0$) to be transmitted into $k \in \mathbb{N}$ submessages ($t_p$) by Secret Sharing, so that $n \in \mathbb{N}$ submessages ($t_p$) are required to be able to therefrom reconstruct the message (mo),

b) a switching means with which the submessages ($t_p$) only are transmitted to independently addressable computer systems ($S_x$) for switching via secure channels in different parties ($MP_u$, $MP_v$, $MP_w$) to which a secure channel can be set up and which in the following also are referred to as acquaintances, and wherein into no party ($MP_u$, $MP_v$, $MP_w$) more than one submessage ($t_p$) can get,

c) an authentification means in each independently addressable computer system for switching ($S_x$) for checking the submessage ($t_p$) arriving from acquaintances via a secure channel and for adding an authenticity identifier ($I_{Ap}$) to a correct submessage ($t_p$),

d1) a transmission means for data transmission, with which, when between an independently addressable computer system for switching ($S_x$) and the addressee ($S_B$) no secure channel can be set up, the correct submessage ($t_p$) together with the associated correct authenticity identifier ($I_{Ap}$) is forwarded to another independently addressable computer system for switching ($S_{xNew}$) in the same party ($MP_u$, $M_v$, $MP_w$) via a secure channel, wherein step d1) is again executed by this other independently addressable computer system for switching ($S_{xNew}$) after checking the correctness,

d2) a transmission means for data transmission, with which, when between an independently addressable computer system for switching ($S_x$) and the addressee ($S_B$) a secure channel can be set up, the correct submessage ($t_p$) together with the associated correct authenticity identifier ($I_{Ap}$) is transmitted to the addressee ($S_B$) via this secure channel,

e) a checking means and storage means with which the addressee ($S_B$) checks all submessages ($t_p$) which it has received via secure channels together with the associated authenticity identifiers ($I_{Ap}$) from independently addressable computer systems for switching ($S_x$), and with which the addressee ($S_B$) stores all submessages ($t_p$) together with the associated authenticity identifiers ($I_{Ap}$), if they pass the test, together with a unique identification of the party ($MP_u$, $MP_v$, $MP_w$) from which it has received the same.

f) a reconstruction means, with which the addressee ($S_B$), when it has correctly received at least n submessages ($t_p$) together with matching associated authenticity identifiers ($I_{AP}$) from at least n different parties ($MP_u$, $MP_v$, $MP_w$), can reconstruct the message ($m_0$) from the submessages ($t_p$).

## Revendications

**1.** Procédé de transmission de données en toute sécurité entre en émetteur ($S_A$) quelconque et un destinataire ($S_B$) quelconque, qui sont reliés entre eux par l'intermédiaire d'un réseau informatique (1), ce réseau informatique (1) comprenant des parties ($MP_i$, $MP_u$, $MP_v$, $MP_w$, $MP_j$), ces parties étant des quantités partielles disjointes de système informatiques adressables de manière autonome du réseau informatique (1) et

a) un message ($m_0$) à transmettre étant divisé par Secret Sharing en $k \in \mathbb{N}$ messages partiels ($t_p$), de façon à ce que $n \in \mathbb{N}$ messages partiels ($t_p$) soient nécessaires pour reconstruire le message ($m_0$) à transmettre à partir de ceux-ci,

b) les messages partiels ($t_p$) étant transmis uniquement à des systèmes informatiques adressables de manière autonome pour la médiation ($S_x$) par l'intermédiaire de canaux sécurisés dans différentes parties ($MP_u$, $MP_v$, $MP_w$), vers lesquelles un canal sécurisé peut être établi et qui sont également appelés « connaissances » dans la suite, et pas plus d'un message partiel ($t_p$) ne pouvant arriver dans une partie ($MP_u$, $MP_v$, $MP_w$),

c) chaque système informatique adressable de manière autonome pour la médiation ($S_x$), le message partiel ($t_p$) provenant d'une connaissance par l'intermédiaire d'un canal sécurisé et ajoutant, à un message partiel ($t_p$) correct, un identifiant d'authenticité ($I_{Ap}$),

d1) si, entre un système informatique adressable de manière autonome pour la médiation ($S_x$) et le destinataire ($S_B$), aucun canal sécurisé ne peut être établi, le message partiel ($t_p$) correct est transféré, conjointement avec l'identifiant d'authenticité ($I_{Ap}$) correct correspondant, à un système informatique adressable de manière autonome pour la médiation ($S_{xNeu}$) dans la même partie ($MP_u$, $MP_v$, $MP_w$) par l'intermédiaire d'un canal sécurisé, l'étape d1) étant exécutée à nouveau par ce système informatique adressable dé manière autonome polir la médiation ($S_{xNeu}$) après la vérification de conformité,

d2) si, entre un système informatique adressable de manière autonome pour la médiation ($S_x$) et le destinataire ($S_B$), un canal sécurisé peut être établi, le message partiel ($t_p$) correct est transféré, conjointement avec l'identifiant d'authenticité ($I_{Ap}$) correct correspondant et par l'intermédiaire de ce canal sécurisé, au destinataire ($S_B$),

e) le destinataire ($S_B$) vérifie tous les messages partiels ($t_p$) qu'il a reçu, conjointement avec les identifiants d'authenticité ($I_{Ap}$), correspondants, de systèmes informatiques adressables de manière autonome pour la médiation ($S_x$), par l'intermédiaire de canaux sécurisés et les enregistre conjointement avec une identification univoque dé la partie ($MP_u$, $MP_v$, $MP_w$) de laquelle il les a reçus,

f) si le destinataire ($S_B$) a reçu correctement au moins n messages partiels ($t_p$) conjointement avec des identifiants d'authenticité, ($I_{Ap}$) concordants correspondants d'au moins n parties ($MP_u$, $MP_v$, $MP_w$) différentes, il reconstitue le message ($m_0$) à partir des messages partiels ($t_p$).

**2.** Procédé selon la revendication 1, **caractérisé en ce que** le message ($m_0$) est muni, avant la division Secret Sharing, d'un procédé de chiffrement et/ou d'une somme de contrôle.

**3.** Procédé selon la revendication 2, **caractérisé en ce que** le procédé de chiffrement est un procédé de chiffrement One-Pad.

**4.** Procédé selon la revendication 1, **caractérisé en ce qu'**une intégrité du message ($m_0$) est vérifiée après l'étape 1.f) à l'aide des données de contrôle contenues dans le message ($m_0$).

**5.** Procédé selon la revendication 1, **caractérisé en ce que** le système informatique adressable de manière autonome ($S_A$, $S_B$, $S_x$) comprend une adresse qui contient, en plus d'une adresse à l'intérieur d'une partie ($MP_u$, $MP_v$, $MP_w$), également une adresse de la partie ($MP_u$, $MP_v$, $MP_w$) elle-même.

**6.** Procédé selon la revendication 1, **caractérisé en ce que**, pour chaque système informatique adressable de manière autonome d'une partie ($MP_i$), un canal vers exactement deux systèmes informatiques adressables de manière autonome supplémentaires, qui appartiennent à la même partie ($MP_i$) et qui sont appelés « connaissances », peut être établi de façon à ce que les connaissances de tous les systèmes informatiques d'une partie ($MP_i$) forment une structure annulaire cohérente.

**7.** Procédé selon la revendication 5, **caractérisé en ce que** les adresses des systèmes informatiques adressables de manière autonome à l'intérieur d'une partie ($MP_i$) présentent un ordre total.

**8.** Procédé selon la revendication 7, **caractérisé en ce que** les connaissances sont précisément les systèmes informatiques adressables de manière autonome à l'intérieur d'une partie ($MP_i$) entre les adresses desquels, à l'intérieur de l'ordre total des adresses de la partie (MPi), ne se trouve aucune adresse supplémentaire et **en ce que**, en outre, les systèmes informatiques adressables de manière autonome avec l'adresse la plus petite et l'adresse la plus grande à l'intérieur de l'ordre total des adresses de la partie ($MP_i$) sont des connaissances.

**9.** Procédé selon la revendication 8, **caractérisé en ce que**, à l'aide des adresses des systèmes informatiques adressables de manière autonome ($S_{x1}$, $S_{x2}$), une distance annulaire R($S_{x1}$, $S_{x2}$) entre deux systèmes informatiques adressables de manière autonome ($S_{x1}$, $S_{x2}$) à l'intérieur d'une structure annulaire à l'intérieur d'une partie ($MP_i$) est déterminée, la transmission à un nouveau système informatique adressable de manière autonome pour la médiation ($S_{xNeu}$) étant déterminée en fonction de la distance annulaire R($S_{x1}$, $S_{x2}$).

**10.** Procédé selon la revendication 5, **caractérisé en ce que** des systèmes informatiques adressables de manière autonome ($S_x$) de la partie ($MP_i$) sont ajoutés et pourvus avec une adresse dans la partie (MPi) selon le procédé suivant, lès systèmes informatiques adressable de manière autonome qui deviennent des connaissances et qui effectuent manuellement des vérifications d'identité et un échange de données de liaison étant en outre sélectionnés, d étant une, constante avec $d \in \mathbb{N}_1 \wedge d > 1$ et z étant une constante pour laquelle $z \in \mathbb{N}_1$ s'applique et $\alpha$ étant une variable pour l'adresse actuelle dans la partie ($MP_i$) et r étant en outre une variable entière initialisée à un,

a) le premier système informatique adressable de manière autonome ($S_x$) de la partie ($MP_i$) reçoit l'adresse $\alpha = 0$ interne à la partie et aucune connaissance ne doit encore être établie,
b) tant qu'il existe un système informatique adressable de manière autonome ($S_x$) dans la partie ($MP_i$) avec l'adresse interne à la partie $\alpha$, $\alpha$ est augmentée de $d^z/d^r$,
c) si $\alpha \geq d^z$, alors r est incrémenté de un et $\alpha = d^z / d^r$ est défini,
d) un nouveau système informatique adressable de manière autonome ($S_{i\alpha}$) avec l'adresse interne à la partie $\alpha$ est ajouté,

e) le nouveau système informatique adressable de manière autonome ($S_{i\alpha}$) doit, pour chaque $f \in \mathbb{N}_1 | f \leq r$,

recevoir, en tant que connaissances internes à la partie, un système informatique adressable de manière autonome avec l'adresse interne à la partie $\beta_+ = (\alpha + c^f) \bmod d^z$ et un système informatique adressable de manière autonome avec l'adresse interne à la partie $\beta_- = (\alpha - d^f) \bmod d^z$, deux cas étant à distinguer, pour l'adresse $\beta_+$ et pour l'adresse $\beta_-$,
f1) s'il existe déjà un système informatique adressable de manière autonome ($S_{i\beta+}$ / $S_{i\beta-}$) avec l'adresse $\beta$+ / $\beta$- dans la partie ($MP_i$), alors ce système informatique adressable de manière autonome ($S_{i\beta+}$ / $S_{i\beta-}$) devient la connaissance du nouveau système informatique adressable de manière autonome ($Si_a$),
f2) il n'existe encore aucun système informatique adressable de manière autonome ($S_{i\beta+}$ / $S_{i\beta-}$) avec l'adresse $\beta$+ / $\beta$- dans la partie ($MP_i$) et la distance d'adresse $\Delta(\varphi, \chi)$ entre deux adresses internes à la partie $\varphi$ et $\chi$ dans la partie ($MP_i$) est définie comme suit :

$$\Delta(\varphi, \chi) = \min(\{abs(\varphi - (\chi + q * d^z)) \mid q \in Z\})$$

de façon à ce que le système informatique adressable de manière autonome ($S_{i\gamma}$) devient la connaissance provisoire sub-optimale du nouveau système informatique adressable de manière autonome ($S_{i\alpha}$), dont l'adresse $\gamma$ interne à la partie possède la valeur $\Delta(\gamma, \beta_+)$ /$\Delta$ ($\gamma$, $\beta_-$) la plus faible de tous les systèmes informatiques adressables de manière autonome de la partie ($MP_i$) qui présentent une distance d'adresse par rapport à $\alpha$ inférieure à $\Delta(\beta_+, \alpha)$ / $\Delta(\beta_-, \alpha)$,
g) pour le système informatique adressable de manière autonome suivant à ajouter, continuer avec l'étape b).

**11.** Procédé selon la revendication 1, **caractérisé en ce que**, pour la médiation du message à l'intérieur d'une partie ($MP_i$), appelée « routing » dans la suite, chaque système informatique adressable de manière autonome pour la médiation ($S_x$), qui n'est pas une connaissance du destinataire ($S_B$), sélectionne le meilleur système informatique adressable de manière autonome suivant pour la médiation ($S_{xNeu}$) parmi ses connaissances et lui transfère le message, le meilleur système informatique adressable de manière autonome suivant pour la médiation ($S_{xNeu}$) étant exactement la connaissance du système informatique adressable de manière autonome pour la médiation ($S_x$) dont l'adresse interne à la partie présente la distance d'adresse la plus petite par rapport à l'adresse interne à la partie du destinataire ($S_B$).

**12.** Procédé selon la revendication 11, **caractérisé en ce que**, dans chaque partie de médiation ($MP_i$), une connaissance du destinataire ($S_B$) est définie en tant que dernier médiateur, afin de pouvoir ensuite la contrôler de manière optimale en tant que cible temporaire du routing fidèle à la partie, les systèmes informatiques adressables de manière autonome pour la médiation ($S_x$) dans différentes parties ($MP_i$), qui présentent la même adresse $\chi$ interne à la partie, devant être connus entre eux par paires et dans le cas où il n'existe, dans une partie ($MP_i$), encore aucun système informatique adressable de manière autonome avec la même adresse $\chi$ interne à la partie, avec lequel le système informatique adressable de manière autonome appartenant à la partie ($MP_i$), établissant une connaissance provisoire sub-optimale qui a, dans la partie ($MP_i$), l'adresse interne à la partie suivante inférieure à $\chi$.

**13.** Procédé selon la revendication 12, **caractérisé en ce que**, pour la transmission d'un message partiel ($t_p$) par l'expéditeur $S_{i\alpha}$ qui appartient à une première partie ($MP_i$), au destinataire $S_{j\beta}$ qui appartient à une deuxième partie ($MP_i$) et a l'adresse interne à la partie $\beta$, une série de connaissances de systèmes informatiques adressables de manière autonome, appariées entre elles, devant exister, appartenant à une troisième partie ($MP_v$), différente de la première partie ($MP_i$) et de la deuxième partie ($MP_j$), pour la médiation entre $S_{i\alpha}$ et $S_{j\beta}$, et $S_v$* étant une variable pour les systèmes informatiques adressables de manière autonome dans la troisième partie ($MP_v$), les étapes suivantes doivent être exécutées

a) $S_{i\alpha}$ envoie d'abord le message m par l'intermédiaire d'un canal sécurisé à une connaissance $S_v$* qui appartient à la troisième partie ($MP_v$) et, si ce système informatique adressable de manière autonome $S_v$* est également une connaissance du système informatique adressable de manière autonome $S_{j\beta}$, le destinataire peut être joint à partir de là par l'intermédiaire d'un canal sécurisé et le procédé est terminé,
b) sinon, on tente de joindre un système informatique adressable de manière autonome $S_{v\beta}$, qui appartient à une troisième partie ($MP_v$) et qui y possède une adresse interne à la partie $\beta$, avec le routing fidèle à la partie et préventif selon la revendication 10 et, si le système informatique adressable de manière autonome $S_{v\beta}$ existe, le système informatique adressable de manière autonome $S_{j\beta}$ peut être joint directement à partir du système informatique adressable de manière autonome $S_{v\beta}$ par l'intermédiaire d'un canal sécurisé et le procédé est terminé,
c) sinon la variable $S_v$* est définie sur le système informatique adressable de manière autonome qui possède, dans la troisième partie ($MP_v$) la plus grande adresse interne à la partie inférieure à $\beta$ et, si le routing fidèle à la partie et préventif selon la revendication 10, sans succès, ne s'est pas terminé dans le système adressable de manière autonome $S_v$*, mais dans un système informatique adressable de manière autonome $S_{v\chi}$, le message m est envoyé par le système informatique adressable de manière autonome $S_{v\chi}$ par l'intermédiaire d'un canal sécurisé au système informatique adressable de manière autonome $S_v$*, ce qui doit toujours être possible directement, car le système informatique $S_{v\chi}$ peut être uniquement une connaissance du système informatique adressable de manière autonome $S_v$*,
d) si le système informatique adressable de manière autonome $S_v$* est une connaissance du système informatique adressable de manière autonome $S_{j\beta}$, le système informatique adressable de manière autonome $S_{j\beta}$ est joignable directement à partir du système informatique $S_v$* et le procédé est terminé,
e) si le système informatique adressable de manière autonome $S_v$* possède l'adresse interne à la partie 0, il n'existe aucune connaissance du système informatique adressable de manière autonome $S_{j\beta}$ dans la troisième partie ($MP_v$) ; le système informatique adressable de manière autonome $S_v$* envoie un message au système informatique adressable de manière autonome $S_{i\alpha}$ indiquant que la notification de m n'est pas possible et le procédé est terminé,
f) $\Phi$ (Sx$\chi$) est une fonction qui fournit le plus petit nombre naturel r pour lequel :

$$\chi \bmod d^{(z-r)} = 0 \wedge r > 0$$

et le système informatique adressable de manière autonome $S_v$* transfère le message m au système informatique adressable de manière autonome $S_{vv}$ à partir de la connaissance appartenant à la partie de méfiance ($MP_v$) de $S_v$* par l'intermédiaire d'un canal sécurisé, qui possède l'adresse interne à la partie v et pour lequel $\Phi(S_{vv}) \leq \Phi(S_v^*)$
et cette connaissance $S_{vv}$ devient le nouveau système informatique adressable de manière autonome $S_v$*, pour lequel le procédé est continué avec l'étape d).

**14.** Système de transmission de données pour la transmission de données sécurisée entre un expéditeur ($S_A$) quelconque et un destinataire ($S_B$) quelconque, reliés entre eux par l'intermédiaire d'un réseau informatique (1), le réseau informatique (1) comprenant des parties ($MP_i$, $MP_u$, $MP_v$, $MP_w$, $MP_j$), les parties étant des parties partielles disjointes de systèmes informatiques adressables de manière autonome du réseau informatique (1), et

a) un moyen de division d'un message à transmettre (mo) par Secret Sharing en $k \in N$ messages partiels ($t_p$), de façon à ce que $n \in N$ messages partiels (tp) soient nécessaires pour reconstruire le message ($m_0$) à partir de cela,
b) un moyen de médiation avec lequel des messages partiels ($t_p$) sont transmis uniquement à des systèmes informatiques adressables de manière autonome ($S_x$) pour la médiation par l'intermédiaire de canaux sécurisés dans différentes parties ($MP_u$, $MP_v$, $MP_w$), vers lesquels un canal sécurisé peut être établi et qui sont également appelés « connaissances » dans la suite et pas plus d'un message partiel ($t_p$) ne pouvant arriver dans une partie ($MP_u$, $MP_v$, $MP_w$),
c) un moyen d'authentification dans chaque système informatique adressable de manière autonome pour la médiation ($S_x$) pour la vérification du message partiel ($t_p$) provenant, par l'intermédiaire d'un canal sécurisé, de connaissances et pour l'ajout d'un identifiant d'authenticité ($I_{AP}$) à un message partiel ($t_p$) correct,
d1) un moyen de transmission pour la transmission de données, avec lequel, lorsqu'aucun canal sécurisé ne peut être établi entre un système informatique adressable de manière autonome pour la médiation ($S_x$) et le destinataire ($S_B$), le message partiel ($t_p$) correct est transféré, conjointement avec l'identifiant d'authenticité ($I_{AP}$) correct correspondant, à un autre système informatique adressable de manière autonome pour la médiation ($S_{xNeu}$) dans la même partie ($MP_u$, $MP_v$, $MP_w$) par l'intermédiaire d'un canal sécurisé, l'étape d1) étant exécutée à nouveau par cet autre système informatique adressable de manière autonome pour la médiation ($S_{xNeu}$) après le contrôle de conformité,
d2) un moyen de transmission pour la transmission de données, avec lequel, lorsqu'aucun canal sécurisé ne peut être établi entre un système informatique adressable de manière autonome pour la médiation ($S_x$) et le destinataire ($S_B$), le message partiel ($t_p$) correct est transmis conjointement avec l'identifiant d'authenticité ($I_{AP}$) correct correspondant, par l'intermédiaire de ce canal sécurisé, au destinataire ($S_B$),
e) un moyen de contrôle et un moyen d'enregistrement, avec lequel le destinataire ($S_B$) vérifie tous les messages partiels ($t_p$) qu'il a reçus, conjointement avec les identifiants d'authenticité ($I_{AP}$) correspondants, de systèmes informatiques adressables de manière autonome pour la médiation ($S_x$) par l'intermédiaire de canaux sécurisés et avec lequel le destinataire ($S_B$) enregistre les messages partiels ($t_p$) conjointement avec les identifiants d'authenticité ($I_{AP}$) correspondants, s'ils passent la vérification avec succès, conjointement avec un identifiant unique de la partie ($MP_u$, $MP_v$, $MP_w$) à partir de laquelle il les a reçus,
f) un moyen de reconstitution avec lequel le destinataire ($S_B$), s'il a reçu correctement au moins n messages partiels ($t_p$) conjointement avec les identifiants d'authenticité ($I_{AP}$) correspondants coïncidents, d'au moins n parties différentes ($MP_u$, $MP_v$, $MP_w$), peut reconstituer le message (mo) à partir des messages partiels ($t_p$).

Fig. 1

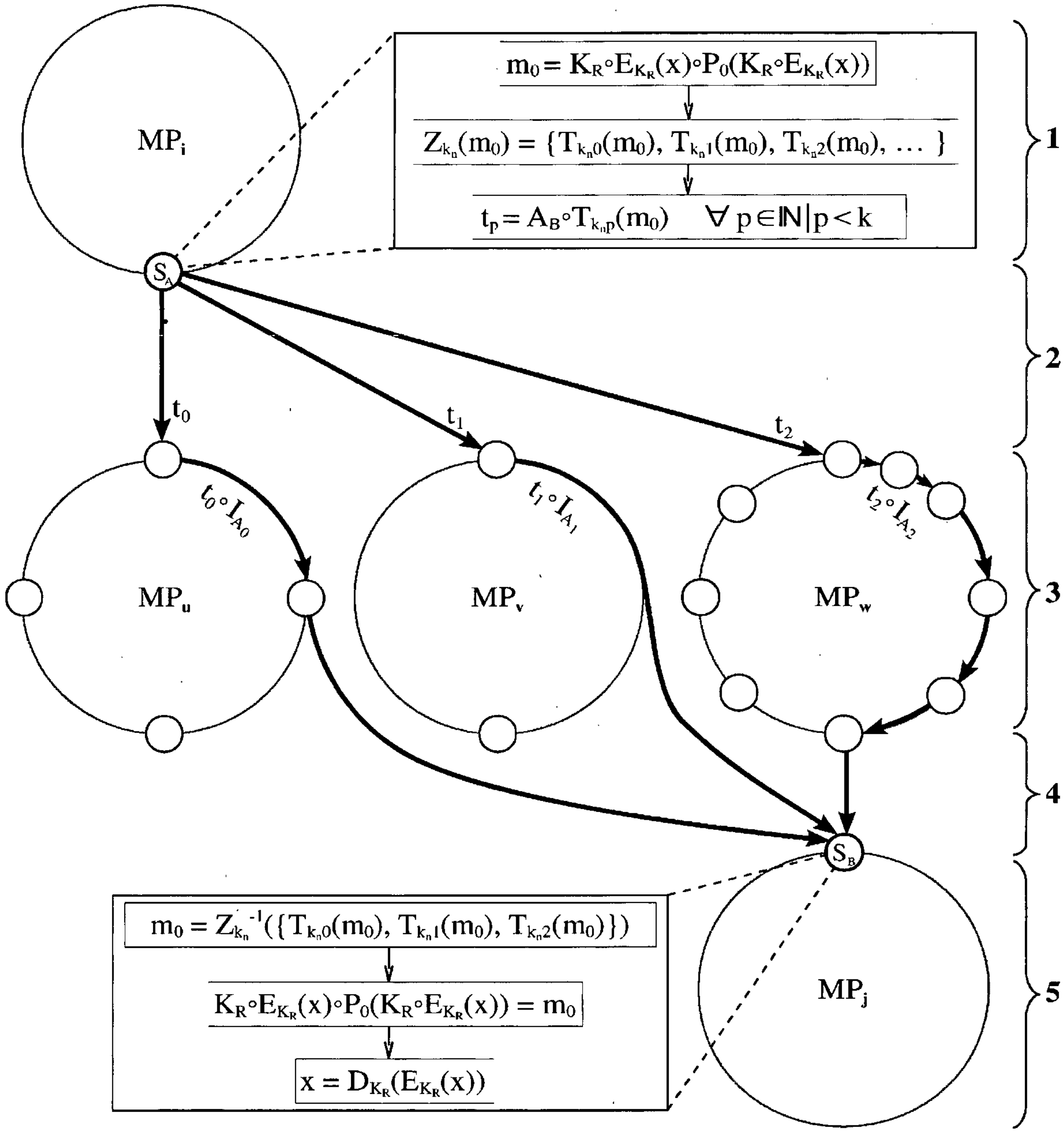


*Abbildung 1: Partitions-Routing mit $\Psi=2$ und $k \geqslant n=3$. $MP_i$ und $MP_j$ dürfen gleich sein, $MP_u$, $MP_v$ und $MP_w$ müssen aber von diesen und voneinander verschieden sein.*

Fig. 2

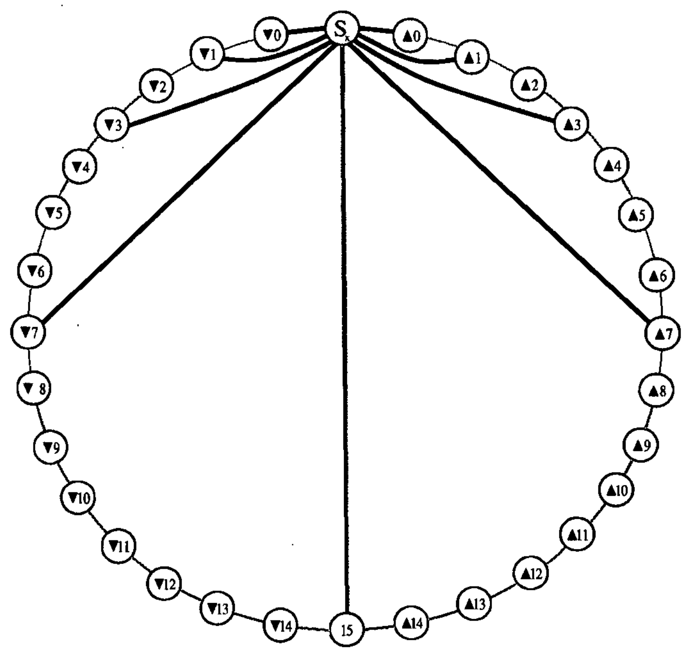


*Abbildung 2: Die kleinen Kreise symbolisieren die S-Knoten einer MP. Die fetten Linien stehen für die optimalen parteiinternen Bekanntschaften eines S-Knotens $S_x$ mit d = 2. Die Zahlen entsprechen jeweils der Ringdistanz der S-Knoten zu $S_x$.*

Fig. 3

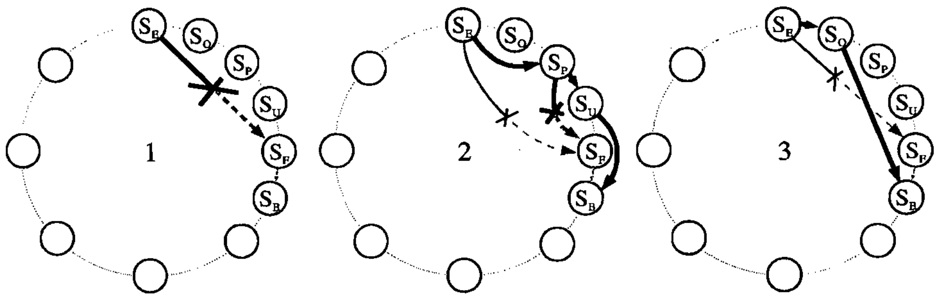


*Abbildung 3: Die Grafik links (1) zeigt die Störung der optimalen Weiterleitung von $S_E$ zu $S_B$ durch den Ausfall von $S_E$. Wird daraufhin zum Bekannten der nächstgeringen Ringdistanz zu $S_B$ weitergeleitet (mittlere Darstellung, 2), sind doppelt so viele Schritte erforderlich wie beim vorausschauenden Routing (rechts im Bild, 3).*

Fig. 4

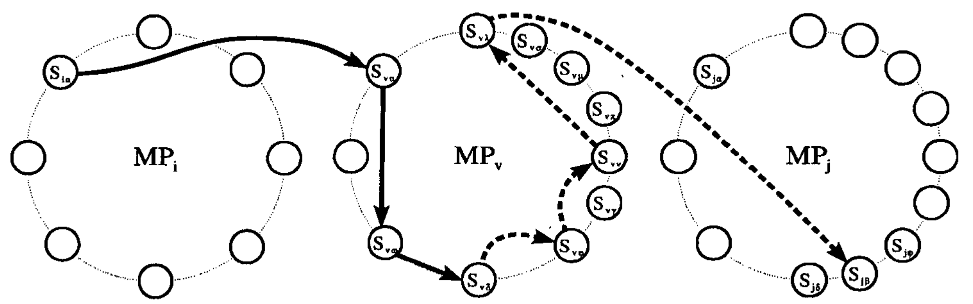


*Abbildung 4: Suche nach einem Bekannten von $S_{j\beta}$ in $MP_v$: Die S-Knoten $S_{v\gamma}$, $S_{v\pi}$, $S_{v\mu}$ und $S_{v\sigma}$ wurden in einer späteren Runde hinzugefügt – sie kommen nach der Prüfung von $S_{v\varphi}$ bzw. $S_{vv}$ nicht mehr als Bekannte von $S_{j\beta}$ in Frage und werden übersprungen.*

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2116956 A1
- WO 2008096608 A1
- US 6182214 B1
- WO 0041357 A1
- DE 19740333


### In der Beschreibung aufgeführte Nicht-Patentliteratur


- Constructing Disjoint Paths for Secure Communication. **AMITABHA BAGCHI ; AMITABH CHAUDHARY ; MICHAEL T. GOODRICH ; SHOUHUAI XU.** Lecture Notes in Computer Science. Springer Verlag, 2003, vol. 2848, 181-195
- **PAUL BARAN.** On Distributed Communications Networks. RAND Corporation Santa Monica, 1962
- **C.H. BENNETT ; G. BRASSARD.** Quantum Cryptography: Public Key Distribution and Coin Tossing. *Proceedings of IEEE International Conference on Computers Systems and Signal Processing, Bangalore India; 1984,* 1984, 175-179
- **DANIEL J. BERNSTEIN.** Post-quantum cryptography. Springer-Verlag, 2008
- **ALEX BIRYUKOV ; DMITRY KHOVRATOVICH.** Related-key Cryptanalysis of the Full AES-192 and AES-256. *Cryptology ePrint Archive,* 2009
- **J. CALLAS et al.** RFC 4880: OpenPGP Message Format. The Internet Society, 2007
- *CiteSeerX beta,* 2011
- **D. COOPER et al.** RFC 5820: Internet X.509 Public Key Infrastructure Certificate and Certificate Revocation List (CRL) Profile. The Internet Society, 2008
- **JOAN DAEMEN ; VINCENT RIJMEN.** *The design of Rijndael: AES - the advanced encryption standard,* 2002
- **D. DOLEV ; C. DWORK ; O. WAARTS ; M. YUNG.** Perfectly secure message transmission. *31st Annual Symposium on Foundations of Computer Science (FOCS 1990),* 1990, http://www.computer.org/portal/web/csdl/doi/10.1109/FSCS.1990.89522
- **D. EASTLAKE 3RD ; T. HANSEN et al.** RFC 4634: Secure Hash Algorithms (SHA and HMAC-SHA). The Internet Society, 2006
- *Register Plus; EPO 2011,* 2011, https://register.epoline.org
- **NIELS FERGUSON ; BRUCE SCHNEIER ; TADAYOSHI KOHNO.** Cryptography Enineering. Wiley Publishing, Inc, 2010
- Towards Optimal and Efficient Perfectly Secure Message Transmission. **MATTHIAS FITZI ; MATTHEW FRANKLIN ; JUAN GARAY ; S. HARSHA VARDHAN.** Lecture Notes in Computer Science. Springer Verlag, 2007, vol. 4392, 311-322
- Google Suche. Google Inc, 22. Februar 2011
- IBM Research Division; IBM's Test-Tube Quantum Computer Makes History. *First Demonstration Of Shor's Historic Factoring Algorithm; ScienceDaily,* 2001, http://www.sciencedaily.com/releases/2001/12/011220081620.htm
- **KOHL, C. NEUMAN.** RFC 1510. Massachusetts Institute of Technology, 1993
- **KAORU KUROSAWA ; KAZUHIRO SUZUKI.** Truly Efficient 2-Round Perfectly Secure Message Transmission Scheme. *IEEE Transactions on Information Theory,* 2009, vol. 55 (11), 5223-5232
- PKCS #1 v2.1: RSA Cryptography Standard. RSA Security Inc, 2002
- **BRUCE SCHNEIER ; JOHN KELSEY ; DOUG WHITING ; DAVID WAGNER ; CHRIS HALL ; NIELS FERGUSON.** The Twofish Encryption Algorithm: A 128-Bit Block Cipher. John Wiley & Sons, 1999
- **ADI SHAMIR.** How to share a secret; Communications of the ACM. ACM, 1979, vol. 22, 612-613
- **C. E. SHANNON.** Communication theory of secrecy systems. *Bell System Technical Journal,* 1949, vol. 28, 656-715
- **PETER W. SHOR.** Polynomial time algorithms for prime factorization and discrete logarithms on a quantum computer; Bell Labs 1994; Preliminary version appeared in Proc. of 35th Annual Symp. on Foundations of Computer Science, Santa Fe, NM. *SIAM J. Computing,* 20. November 1994, vol. 26, 1484, http://arxiv.org/abs/quant-ph/9508027v2

- **ALEXANDER SOTIROV ; MARC STEVENS ; JACOB APPELBAUM ; ARJEN LENSTRA ; DAVID MOLNAR ; DAG ARNE OSVIK ; BENNE DE WEGER.** MD5 considered harmful today: Creating a rogue CA certificate. *25th Annual Chaos Communication Congress,* 2008, http://www.win.tue.nl/hashclash/rogue-ca
- SpringerLink. Springer Verlag, 22. Februar 2011